# EUROPÄISCHE PATENTANMELDUNG

(11) **EP 4 741 885 A2**
(43) Veröffentlichungstag der Anmeldung: **13.05.2026**
(21) Anmeldenummer: 26168136.5
(22) Anmeldetag: 07.06.2023
(51) Int. Cl.: G01V 8/20

(54) **MIKROWELLENSCHRANKEN-SYSTEM**

(30) Priorität: 10.06.2022 EP 22178491; 10.06.2022 EP 22178479
(62) Teilanmeldung aus: 23178107.1
(71) Anmelder: VEGA Grieshaber KG, 77709 Wolfach (DE)
(72) Erfinder: SCHULTHEISS, Daniel, 78132 Hornberg (DE); FISCHER, Michael, 72275 Alpirsbach (DE)
(74) Vertreter: Maiwald GmbH

(57) **Zusammenfassung**

Es wird ein Mikrowellenschranken-System beschrieben, mit:
einer ersten Mikrowellenschranke (100), deren Mikrowellen-Sendeeinheit einen elektrisch abstimmbaren Mikrowellen-Generator (600) aufweist, wobei die erste Mikrowellenschranke (100) eingerichtet ist, mit einer wählbaren Mikrowellen-Frequenz betrieben zu werden; und zumindest
einer zweiten Mikrowellenschranke, deren Mikrowellen-Sendeeinheit einen elektrisch abstimmbaren Mikrowellen-Generator (600) aufweist, wobei die zweite Mikrowellenschranke eingerichtet ist, mit einer wählbaren Mikrowellen-Frequenz betrieben zu werden; und wobei die erste Mikrowellenschranke (100) und die zweite Mikrowellenschranke jeweils eine Mikrowellen-Sendeeinheit (104) und eine Mikrowellen-Empfangseinheit (102) aufweist; und wobei das Mikrowellenschranken-System mittels der jeweiligen Mikrowellen-Empfangseinheit (102) eingerichtet ist, Mikrowellen-Betriebs-Kanäle (210) in einem verfügbaren Frequenzbereich für Mikrowellenschranken zu bestimmen; und das Mikrowellenschranken-System eingerichtet ist, den jeweiligen Mikrowellenschranken (100) des Mikrowellenschranken-Systems jeweils einen Mikrowellen-Betriebs-Kanal (210) so zuzuordnen, dass eine gegenseitige Störung der Mikrowellenschranken (110) vermindert wird; und die jeweilige Mirowellenschranke eine Kommunikationseinheit aufweist, die eingerichtet ist, die jeweilige Mikrowellen-Empfangseinheit (102) mit der jeweiligen Mikrowellen-Sendeeinheit (104), drahtgebunden und/oder drahtlos, signalmäßig zu koppeln, um den Mikrowellen-Betriebs-Kanal für den Betrieb der jeweiligen Mikrowellenschranke (100) von der Mikrowellen-Empfangseinheit (102) an die Mikrowellen-Sendereinheit (104) zu übertragen.

## Beschreibung

### Bezugnahme auf verwandte Anmeldungen

Die vorliegende Anmeldung beansprucht die Prioritäten der europäischen Patentanmeldungen Nr. 22 178 479.6, eingereicht am 10. Juni 2022 und Nr. 22 178 491.1, eingereicht am 10. Juni 2022, die in vollem Umfang durch Bezugnahme in das vorliegende Dokument aufgenommen werden.

### Hintergrund

Eine Mikrowellenschranke sendet typischerweise ein Dauerstrich-Mikrowellensignal in Richtung eines zugeordneten Empfängers aus. Wird der direkte Übertragungsweg von Sender zu Empfänger durch ein Objekt oder durch einen Füllstand in einem Behälter unterbrochen, macht sich dies durch einen fehlenden oder reduzierten Empfangspegel im Empfänger bemerkbar. Das Abfallen des Empfangspegels kann in einem Empfänger detektiert werden und in ein Schaltsignal umgewandelt werden. Um eine Richtung zu bestimmen, aus welcher ein Objekt die Schranke passiert, kann beispielsweise ein System mit zwei Empfängern und einem Sender oder zwei komplett unabhängig voneinander arbeitende Mikrowellenschranken verwendet werden. Passiert ein Objekt die so aufgebauten Schranken, kann aus der Schaltreihenfolge eine Richtung der Passage bestimmt werden. Werden die beiden Empfänger in einem System aus mehreren Mikrowellenschranken in geringem räumlichen Abstand voneinander betrieben, kann Mikrowellenstrahlung von einer Mikrowellen-Sendeeinheit einer Mikrowellenschranke eine Empfangseinheit einer benachbarten weiteren Mikrowellenschranke stören. Dies kann eine Empfindlichkeit und damit auch einen Störabstand, bzw. Signal-Rauschabstand, der einzelnen Empfangseinheit reduzieren. Ein solcher reduzierte Störabstand kann in einem Anstieg einer Wahrscheinlichkeit für Fehlfunktionen oder Fehlschaltungen der betroffenen Mikrowellenschranke resultieren. Um Störabstände bei benachbarten Mikrowellen-Empfangseinheiten zu erhöhen, können typischerweise unterschiedliche Polarisationsebenen für die benachbarten Mikrowellenschranken gewählt werden. Weiterhin können typischerweise Positionen von Sender und Empfänger benachbarter Mikrowellenschranke so vertauscht werden, dass ein Sender der einen Mikrowellenschranke benachbart zu einem Empfänger der anderen Mikrowellenschranke angeordnet wird. Damit kann der Sender der einen Mikrowellenschranke nicht auf direktem Wege den Empfänger der anderen Mikrowellenschranke stören. Dadurch kann eine Entkopplung der beiden Mikrowellenschranken erreicht werden.

### Offenbarung der Erfindung

Ab einer Anzahl von drei räumlich benachbart angeordnet betriebener Mikrowellenschranken kann der Störabstand mit den oben beschriebenen Maßnahmen nicht mehr verbessert werden. Auch eine Entkopplung der Mikrowellenschranken mittels unterschiedlicher Polarisationsebenen der Mikrowellenstrahlung ist weniger effektiv je mehr Mikrowellenschranken in unmittelbarer Nähe zueinander betrieben werden. D.h. die Störbeeinflussung durch Mikrowellen-Sendeeinheiten in nicht zu der Mikrowellenschranke zugehörige, d.h. fremde Empfangseinheiten, kann sich mit der Anzahl der Mikrowellenschranken verstärkt auswirken. Um beispielsweise eine Position eines Objektes in einem Raum oder einen Füllstand in einem Behälter zu bestimmen, können dagegen mehr als zwei Mikrowellenschranken in geringem räumlichen Abstand zueinander notwendig sein.

Gemäß Aspekten der Erfindung wird ein Mikrowellenschranken-System gemäß den Merkmalen des unabhängigen Anspruchs vorgeschlagen. Vorteilhafte Ausgestaltungen sind Gegenstand der abhängigen Ansprüche sowie der nachfolgenden Beschreibung.

In dieser gesamten Beschreibung der Erfindung ist die Abfolge von Verfahrensschritten so dargestellt, dass das Verfahren leicht nachvollziehbar ist. Der Fachmann wird aber erkennen, dass viele der Verfahrensschritte auch in einer anderen Reihenfolge durchlaufen werden können und zu dem gleichen Ergebnis führen. In diesem Sinne kann die Reihenfolge der Verfahrensschritte entsprechend geändert werden und ist somit auch offenbart.

Gemäß einem Aspekt wird ein Mikrowellenschranken-System mit einer ersten Mikrowellenschranke und zumindest einer zweiten Mikrowellenschranke vorgeschlagen. Eine Mikrowellen-Sendeeinheit der ersten Mikrowellenschranke weist einen elektrisch abstimmbaren Mikrowellen-Generator auf, wobei die erste Mikrowellenschranke basierend auf der Mikrowellen-Sendereinheit eingerichtet ist, mit einer ersten wählbaren Mikrowellen-Frequenz betrieben zu werden.

Eine Mikrowellen-Sendeeinheit der zweiten Mikrowellenschranke weist einen elektrisch abstimmbaren Mikrowellen-Generator auf, und die erste Mikrowellenschranke ist, basierend auf der Mikrowellen-Sendereinheit, eingerichtet, mit einer zweiten wählbaren Mikrowellen-Frequenz betrieben zu werden. Die erste Mikrowellenschranke und die zweite Mikrowellenschranke weisen jeweils eine Mikrowellen-Sendeeinheit und eine Mikrowellen-Empfangseinheit auf. Dabei ist das Mikrowellenschranken-System mittels der jeweiligen Mikrowellen-Empfangseinheit eingerichtet, Mikrowellen-Betriebs-Kanäle, insbesondere zum operativen Betreiben der jeweiligen Mikrowellenschranke, in einem verfügbaren Frequenzbereich für Mikrowellenschranken zu bestimmen und das Mikrowellenschranken-System ist eingerichtet, den jeweiligen Mikrowellenschranken des Mikrowellenschranken-Systems jeweils einen Mikrowellen-Betriebs-Kanal (210) so zuzuordnen, dass eine gegenseitige Störung der Mikrowellenschranken vermindert wird. Die jeweilige Mirowellenschranke weist eine Kommunikationseinheit auf, die eingerichtet ist, die jeweilige Mikrowellen-Empfangseinheit mit der jeweiligen Mikrowellen-Sendeeinheit, drahtgebunden und/oder drahtlos, signalmäßig zu koppeln, um den Mikrowellen-Betriebs-Kanal für den Betrieb der jeweiligen Mikrowellenschranke von der Mikrowellen-Empfangseinheit an die Mikrowellen-Sendereinheit zu übertragen.

Die jeweilige Mikrowellen-Empfangseinheit kann mit der jeweiligen Mikrowellen-Sendeeinheit der jeweiligen Mikrowellenschranke mittels eines Mikrowellen-Signals, basierend auf dem jeweiligen Mikrowellen-Betriebs-Kanal, gekoppelt sein, um einen Kopplungs-Pfad zwischen der jeweiligen Mikrowellen-Sendeeinheit und der jeweiligen Empfangseinheit aufzubauen.

Das Mikrowellenschranken-System kann eingerichtet sein, eine Dämpfung des Mikrowellen-Signals in dem jeweiligen Kopplungs-Pfad zu bestimmten.

Dabei kann der verfügbare Frequenzbereich in dem Mikrowellenschranken-System, insbesondere mittels der jeweiligen Mikrowellen-Empfangseinheit, gespeichert sein und/oder für einen Betrieb des Mikrowellenschranken-Systems, insbesondere der jeweiligen Mikrowellen Empfangseinheit, bereitgestellt werden.

Die Mikrowellen-Empfangseinheit kann eingerichtet sein, den Mikrowellen-Betriebs-Kanal aus dem verfügbaren Frequenzbereich für Mikrowellenschranken zu bestimmen, um eine gegenseitige Störung der Mikrowellenschranken zu vermindern.

Die Kommunikationseinheit der jeweiligen Mikrowellenschranke kann die Mikrowellen-Empfangseinheit mit der jeweiligen Mikrowellen-Sendereinheit monodirektional und/oder bidirektional koppeln, um den Mikrowellen-Betriebs-Kanal von der Mikrowellen-Empfangseinheit zur Mikrowellen-Sendereinheit zu übertragen. Dabei kann diese Kopplung unabhängig von der Kopplung der Mikrowellen-Sendereinheit mit der Mikrowellen-Empfangseinheit, basierend auf der wählbaren Mikrowellen-Frequenz, sein, mittels der eine Dämpfung im Kopplung-Pfad der jeweiligen Mikrowellenschranke bestimmt werden kann.

Eine solche signalmäßige Kopplung mittels der Kommunikationseinheit kann beispielsweise mittels einer Versorgungsleitung der Mikrowellen-Empfangseinheit und/oder der Mikrowellen-Sendeeinheit und/oder einer separaten kabelgebundenen Kopplung erfolgen und/oder mittels einer drahtlosen signalmäßigen Kopplung, wie einer Funkverbindung, z.B. via Bluetooth oder WLAN erfolgen.

Die jeweilige Kommunikationseinheit kann zumindest zwei Kommunikations-Teileinheiten aufweisen, wobei die Mikrowellen-Empfangseinheit eine Kommunikations-Teileinheit aufweist und die Mikrowellen-Sendeeinheit die zweite Kommunikations-Teileinheit aufweist, die jeweils für die Übertragung des bestimmten Mikrowellen-Betriebs-Kanals von der Mikrowellen-Empfangseinheit an die Mikrowellen-Sendeeinheit und/oder für eine umgekehrte Übertragung von der Mikrowellen-Sendereinheit zur Mikrowellen-Empfangseinheit eingerichtet sind.

Die Mikrowellen-Sendeeinheit der jeweiligen Mikrowellenschranke kann eingerichtet sein, ein Mikrowellen-Signal zu generieren und in Richtung auf die Mikrowellen-Empfangseinheit auszustrahlen, wobei die Mikrowellen-Empfangseinheit räumlich entfernt von der Mikrowellen-Sendereinheit angeordnet ist, und die jeweilige Mikrowellen-Sendeeinheit der jeweiligen Mikrowellen-Empfangseinheit einer jeweiligen Mikrowellenschranke einander zugeordnet sind. Zwischen der Mikrowellen-Sendeeinheit und der zugeordneten Empfangseinheit kann ein Kopplungs-Pfad definiert sein, der den räumlichen Bereich charakterisiert, indem die Mikrowellen-Sendeeinheit und die Empfangseinheit mittels eines jeweiligen Mikrowellen-Signals, entsprechend der jeweiligen Mikrowellen-Frequenz des entsprechenden Mikrowellen-Betriebs-Kanal, gekoppelt sind. Wird der direkte Übertragungsweg von der Mikrowellen-Sendeeinheit zu der Mikrowellen-Empfangseinheit durch ein Objekt oder durch einen Füllstand eines Mediums in einem Behälter unterbrochen, kann dies durch einen fehlenden oder reduzierten Empfangspegel in der Mikrowellen-Empfangseinheit bestimmt werden. Diese Dämpfung des Empfangspegels kann in der Mikrowellen-Empfangseinheit detektiert werden und in ein Schaltsignal für das Mikrowellenschranken-System umgewandelt werden.

Eine Anwesenheit eines Objektes innerhalb des jeweiligen Kopplung-Pfads der jeweiligen Mikrowellenschranke kann bestimmt werden, indem, abhängig von einer Interaktion des Objekts in einem jeweiligen Kopplungs-Pfad zwischen der jeweiligen Mikrowellen-Sendeeinheit und der entsprechenden Mikrowellen-Empfangseinheit, eine Dämpfung des Mikrowellen-Signals, basierend auf der jeweiligen Mikrowellenfrequenz der jeweiligen Mikrowellenschranke, detektiert wird.

Dabei ist das Mikrowellen-Signal ein Signal, das auf der jeweiligen Mikrowellen-Frequenz, bzw. dem jeweiligen Mikrowellen-Betriebs-Kanal, der jeweiligen Mikrowellenschranke basiert und von der Mikrowellen-Sendeeinheit ausgesendet wird und von der jeweiligen Mikrowellen-Empfangseinheit empfangen wird, um eine Dämpfung des Mikrowellen-Signals im Kopplungs-Pfad, insbesondere mittels der jeweiligen Mikrowellen-Empfangseinheit, zu bestimmen, um beispielsweise eine Position eines Objektes innerhalb des Kopplungspfades zu bestimmen.

Die jeweilige Mikrowellen-Sendeeinheit einer jeweiligen Mikrowellenschranke kann eingerichtet sein, mittels einer elektrischen Abstimmung eines Mikrowellen-Generators der Mikrowellen-Sendeeinheit, mit einer wählbaren Mikrowellen-Frequenz betrieben zu werden. Zusätzlich oder alternativ kann die jeweilige Empfangseinheit einer jeweiligen Mikrowellenschranke eingerichtet sein, insbesondere mittels einer elektrischen Abstimmung eines Mikrowellen-Generators der Empfangseinheit, mit einer wählbaren Mikrowellen-Frequenz betrieben zu werden, um ein von der Mikrowellen-Empfangseinheit empfangenes Mikrowellen-Signal selektiv, insbesondere in Bezug auf einen Mikrowellen-Betriebs-Kanal, zu betreiben und/oder das Mikrowellen-Signal entsprechend selektiv zu detektieren.

Gemäß einem Aspekt wird vorgeschlagen, dass die jeweilige Mikrowellenschranke des Mikrowellenschranken-Systems einen wählbaren Mikrowellen-Betriebs-Kanal aufweist in dem die jeweilige Mikrowellen-Sendeeinheit das Mikrowellen-Signal entsprechend dem gewählten Mikrowellen-Betriebs-Kanal aussendet und/oder die jeweilige Mikrowellen-Empfangseinheit das Mikrowellen-Signal entsprechend dem gewählten Mikrowellen-Betriebs-Kanal selektiv bestimmt und/oder detektiert, insbesondere um eine Dämpfung des Mikrowellen-Signals im Kopplungspfad zu bestimmen.

Ein zurzeit verfügbarer Frequenzbereich, der von Mikrowellenschranken benutzt werden kann, beschränkt sich im Allgemeinen auf lizenzfreie Frequenzbänder, die in Europa für lizenzfreie "Short-Range Devices" oder UWB-Geräte (UWB: Ultra-Wideband) reguliert sind. Das Mikrowellenschranken-System kann darüber hinaus in anderen Frequenzbereichen betrieben werden. Für die Anwendung der Mikrowellenschranke sinnvoll nutzbare Frequenzbänder liegen beispielsweise im Bereich von 2,4 GHz bis 2,4835 GHz; und/oder 5,725 GHz bis 5,875 GHz; und/oder 24 GHz bis 24,25 GHz; und/oder 57 bis 64 GHz; und/oder 61 GHz bis 61,5 GHz; und/oder 122 GHz bis 123 GHz; und/oder 174,8 GHz bis 182 GHz; und/oder 185 GHz bis 190 GHz; und/oder 231,5 GHz bis 250 GHz und/oder 244 GHz bis 246 GHz.

Die zur Verfügung stehenden und oben angegebenen Frequenzbänder sind typischerweise ausreichend breit, um darin Mikrowellen-Betriebs-Kanäle für eine Vielzahl von Mikrowellenschranken zu definieren.

Beispielsweise kann das Frequenzband von 24 GHz bis 24,25 GHz mit einer Anzahl von Mikrowellen-Frequenz-Kanälen n = 20 zwischen einer unteren Frequenz fu= 24 GHz und einer oberen Frequenz fo = 24,25 GHz Mikrowellen-Frequenz-Kanäle der Breite Δf = 12,5 MHz definiert werden.

Durch eine Verteilung einer Vielzahl von Mikrowellen-Betriebs-Kanälen auf eine Vielzahl von Mikrowellenschranken kann eine gegenseitige Störbeeinflussung der jeweiligen Mikrowellenschranken in einem Mikrowellenschranken-System, entsprechend einer Anwendung eines Frequenz-Multiplexverfahrens (FDM = Frequency-Division Multiplexing), verringert werden.

Der Mikrowellen-Betriebs-Kanal kann der Mikrowellen-Frequenz-Kanal sein, der bestimmt wurde um Störungen durch ein Fremdsignal zu minimieren und mit dem die Mikrowellenschranke betrieben wird.

Die Fremdsignale können Signale sein, die von der jeweiligen Mikrowellen-Empfangseinheit, insbesondere beim bestimmen des Mikrowellen-Betriebskanals, detektiert werden, und beispielsweise von einer weiteren Mikrowellen-Sendeeinheit einer weiteren Mikrowellenschranke und/oder von einer anderen Mikrowellen-Quelle und/oder einer anderen Störstrahlungsquelle generiert werden.

Gemäß einem Aspekt kann das Mikrowellenschranken-System eine Vielzahl von Mikrowellenschranken aufweisen, wobei zumindest ein Teil der Mikrowellenschranken so angeordnet ist, dass eine jeweilige Mikrowellen-Sendeeinheit in eine Mikrowellen-Empfangseinheit einer jeweils benachbarten Mikrowellenschranke einstrahlen kann.

Vorteilhafterweise können, durch das hier beschriebene Mikrowellenschranken-System mit der signalmäßigen Kopplung der Mikrowellen-Empfangseinheit und der Mikrowellen-Sendereinheit zur Übertragung des Mikrowellen-Betriebs-Kanals, die jeweiligen Mikrowellenschranken mit jeweiligen Mikrowellen-Betriebskanälen betrieben werden, wobei die jeweiligen Mikrowellen-Betriebs-Kanäle so bestimmt sind, dass gegenseitige Störung der Mikrowellenschranken des Mikrowellenschranken-Systems vermindert werden. Dabei kann die signalmäßige Kopplung der Mikrowellen-Empfangseinheit und der Mikrowellen-Sendeeinheit unabhängig von der betriebsmäßigen Kopplung sein, die mittels des Mikrowellen-Betriebs-Kanals eine operative Kopplung der jeweiligen Mikrowellenschranke ist. Durch die entsprechende Bestimmung des jeweiligen Mikrowellen-Betriebs-Kanals der jeweiligen Mikrowellenschranke können Fehlschaltungen der jeweiligen Mikrowellenschranke aufgrund von anderen Hochfrequenz-Signalen vermieden und/oder vermindert werden.

**In** einem solchen Mikrowellenschranken-System kann eine Störbeeinflussung von mehreren Mikrowellenschranken verringert werden, die benachbart, insbesondere in geringem Abstand zueinander, betrieben werden. Denn bei benachbart betriebenen Mikrowellenschranken kann eine Mikrowellen-Sendeeinheit in eine Mikrowellen-Empfangseinheit einer benachbarten Mikrowellenschranke einstrahlen. Durch unterschiedliche Mikrowellen-Frequenz-Kanäle für unterschiedliche Mikrowellenschranken in einem Mikrowellenschranken-System können Störabstände der einzelnen Mikrowellenschranken erhöht werden, da die jeweilige Mikrowellenschranke mittels der Mikrowellen-Empfangseinheit das jeweils von der Mikrowellen-Sendeeinheit ausgestrahlte Mikrowellen-Signal selektiv, entsprechend dem zugeordneten Mikrowellen-Frequenz-Kanal, bestimmen kann, was wiederum eine Wahrscheinlichkeit und/oder eine Häufigkeit von Fehlschaltungen in dieser speziellen Konstellation in dem Mikrowellenschranken-System reduziert.

Vorteilhafterweise ist es bei diesem Verfahren nicht notwendig, genaue Vorkenntnis über den Einsatzzweck oder Fachwissen des Anwenders zu haben, um die Mikrowellen-Sendeeinheit und/oder die Mikrowellen-Empfangseinheit aufeinanderpassend einzustellen und damit Störungen zu vermindern. Die hier beschriebene automatische Bestimmung während einer Inbetriebnahme bzw. im Störungsfall mittels einer Sequenz zur Aktivierung des Mikrowellenschranken-Systems, basierend auf dem beschriebenen Mikrowellenschranken-System, kann hier deutlich mehr Komfort und Sicherheit bieten.

Die wählbare Mikrowellen-Frequenz für den Betrieb der jeweiligen Mikrowellenschranke, insbesondere mittels einer elektrische Abstimmung von Oszillatoren für das Generieren der Mikrowelle senderseitig und/oder selektieren von Mikrowellen-Frequenz-Kanälen empfängerseitig, ermöglicht einem Anwender für jede Mikrowellenschranke einen geeigneten Mikrowellen-Betriebs-Kanal zu wählen und jederzeit verändern zu können. Somit kann eine optimale Konfiguration von mehreren benachbarten Mikrowellenschranken in Bezug auf Störsicherheit gewährleistet werden.

Weiterhin kann durch den Einsatz von elektrisch abstimmbaren Oszillatoren für das Generieren von Mikrowellensignalen, ein Hardwareaufwand des Mikrowellenschranken-Systems reduziert werden.

Vorteilhafterweise kann ein solcher elektrisch abstimmbare Oszillator eingerichtet sein, eine Frequenz temperaturstabil zu generieren, um den zur Verfügung stehenden Frequenzbereich in eine möglichst hohe Anzahl von Mikrowellen-Betriebs-Kanälen zu unterteilen, um die Mikrowellenschranken dann zuverlässig, insbesondere bei Temperaturschwankungen, innerhalb entsprechend frequenzbereichsmäßig schmaler Kanäle zu betreiben. Vorteilhafterweise kann ein elektrisch abstimmbarer Oszillator eingerichtet sein, sehr schnell auf einzelne Mikrowellen-Betriebs-Kanäle abgestimmt zu werden. Ein solcher elektrisch abstimmbare Oszillator für das Generieren einer Mikrowellen-Frequenz ist in einem Ausführungsbeispiel unten beschrieben.

Mittels einer jeweiligen Mikrowellenschranke, die mit einer wählbaren Mikrowellen-Frequenz für den Mikrowellen-Betriebs-Kanal betrieben werden kann, kann eine höhere Flexibilität, insbesondere für eine Neukonfiguration von einer bestehenden Anordnung von Mikrowellenschranken in einem Mikrowellenschranken-System erreicht werden. Dies kann insbesondere dann von Vorteil sein, wenn in einer Umgebung des Mikrowellenschranken-Systems eine neue Störquelle aktiv wird.

Um die Störbeeinflussung zu minimieren, können die Mikrowellen-Frequenz-Kanäle, insbesondere mittels der Mikrowellen-Empfangseinheit, so gewählt werden, dass räumlich benachbarten Mikrowellenschranken frequenzmäßig nicht benachbarte Mikrowellen-Frequenz-Kanäle zugeordnet werden. D. h. mit anderen Worten, räumlich benachbarte unabhängige Mikrowellenschranken senden in frequenzmäßig nicht benachbarten Übertragungskanälen. Dazu kann der Mikrowellenschranken-System einer Anzahl und/oder eine Anordnung der jeweiligen Mikrowellenschranken bereitgestellt werden.

Die Bestimmung des Betriebs-Kanals kann in einer Startphase des Mikrowellenschranken-Systems und/oder beim Vorliegen von Störungen des Betriebs des Mikrowellenschranken-Systems erfolgen.

Der verfügbare Frequenzbereich für die jeweilige Mikrowellenschranke kann dadurch bereitgestellt werden, dass er aus einem Speicherbereich der jeweiligen Mikrowellenschranke, insbesondere der jeweiligen Empfangseinheit, abgerufen wird und/oder für einen Betrieb der jeweiligen Mikrowellenschranke mittels eines Interfaces bereitgestellt wird.

Gemäß einem Aspekt wird vorgeschlagen, dass die erste Mikrowellenschranke und die zweite Mikrowellenschranke beliebige Mikrowellenschranken in einem System aus einer Vielzahl von jeweils benachbart angeordneten Mikrowellenschranken sind.

Gemäß einem Aspekt wird vorgeschlagen, dass die erste Mikrowellenschranke signalmäßig mit der zweiten Mikrowellenschranke gekoppelt, insbesondere mittels der jeweiligen Kommunikationseinheiten, ist, um einen Mikrowellen-Betriebs-Kanal für die zweite Mikrowellenschranke, mittels der ersten Mikrowellenschranke zu bestimmen und zu übertragen und/oder den Mikrowellen-Betriebs-Kanal der zweiten Mikrowellenschranke an die erste Mikrowellenschranke zu übertragen und/oder um eine von der Mikrowellen-Empfangseinheit der zweiten Mikrowellenschranke bestimmte Fremdsignal-Amplitude an die erste Mikrowellenschranke, insbesondere zur Bestimmung des Mikrowellen-Betriebs-Kanals für die erste Mikrowellenschranke, zu übertragen.

Dadurch kann beispielsweise der jeweilige Mikrowellen-Betriebs-Kanal und die bestimmten Fremdsignal-Amplituden, zusammen mit den zugeordneten Frequenzen, der jeweils anderen Mikrowellenschranke übermittelt werden.

Gemäß einem Aspekt wird vorgeschlagen, dass die jeweilige Kommunikationseinheit der ersten Mikrowellenschranke und/oder die jeweilige Kommunikationseinheit der zweiten Mikrowellenschranke eingerichtet sind, via Bluetooth und/oder WLAN signalmäßig miteinander gekoppelt zu werden.

In einem System aus einer Vielzahl von Mikrowellenschranken kann die erste Mikrowellenschranke eingerichtet sein, insbesondere entsprechend einem Master-Slave Verfahren, Mikrowellen-Betriebs-Kanäle für die Vielzahl der Mikrowellenschranken zu bestimmen, nachdem die jeweiligen Mikrowellenschranken die jeweils bestimmten Fremdsignal-Amplituden an die erste Mikrowellenschranke übertragen haben. Die erste Mikrowellenschranke kann eingerichtet sein, die von ihr bestimmten Mikrowellen-Betriebs-Kanäle für die jeweiligen Mikrowellenschranken an die jeweiligen Mikrowellenschranken zu übertragen und die jeweiligen Mikrowellenschranken können eingerichtet sein, diese übertragenen Mikrowellen-Betriebs-Kanäle für den Betrieb der jeweiligen Mikrowellenschranke einzustellen. D. h. bei einer Vielzahl von Mikrowellenschranken in einem Mikrowellenschranken-System können alle Mikrowellen-Sendereinheiten und Mikrowellen-Empfangseinheiten eingerichtet sein, mit allen anderen Mikrowellen-Sendeeinheiten und Mikrowellen-Empfangseinheiten, insbesondere mittels der jeweiligen Kommunikationseinheiten, zu kommunizieren. Insbesondere kann die Bestimmung des jeweiligen Mikrowellen-Betriebs-Kanals für die Vielzahl von Mikrowellenschranken erfolgen, nachdem durch die Vielzahl von Mikrowellenschranken Fremdsignal-Amplituden bestimmt wurden und an die erste Mikrowellenschranke übertragen wurden. Mit diesem Verfahren kann verhindert werden, dass Störsignale von anderen Mikrowellen-Sendeeinheiten oder sonstigen Mikrowellen-Quellen und/oder anderen Störquellen zu Fehlschaltungen führen. Dabei kann das Mikrowellenschranken-System eingerichtet sein, sequenziell die jeweiligen Mikrowellen-Sendereinheiten der jeweiligen Mikrowellenschranken zu aktivieren oder zu deaktivieren, um jeweilige Mikrowellen-Betriebs-Kanäle zu bestimmen, die gegenseitige eine Störung der Mikrowellenschranken vermindert.

Das Mikrowellenschranken-System kann zumindest zwei Mikrowellenschranken aufweisen, um beispielsweise zwei Positionen eines Objektes innerhalb des Mikrowellenschranken-Systems zu detektieren, bzw. zu bestimmen.

Mit einer Vielzahl von Mikrowellenschranken innerhalb eines Mikrowellenschranken-Systems kann das Mikrowellenschranken-System eingerichtet sein, zusätzlich eine Bewegung eines Objektes und/oder eine Gestaltsänderung eines Objektes, beispielsweise mit einem Objekt in Form eines Füllguts, bestimmt werden, indem eine zeitliche Abfolge von Dämpfungen des Mikrowellen-Signals innerhalb der Vielzahl von Mikrowellenschranken bestimmt wird.

Für den Betrieb der ersten Mikrowellenschranke kann die Mikrowellen-Sendeeinheit der ersten Mikrowellenschranke eingerichtet sein, ein Mikrowellen-Signal mit einer Frequenz entsprechend dem, mittels einer Kommunikationseinheit einer der Mikrowellenschranken des Mikrowellenschranken-Systems, übermittelten bestimmten Betriebs-Kanal zu generieren.

Gemäß einem Aspekt wird vorgeschlagen, dass das Mikrowellenschranken-System eingerichtet ist, abhängig von einer bereitgestellten Anzahl von Mikrowellenschranken und/oder einer bereitgestellten Anordnung der jeweiligen Mikrowellenschranken in dem Mikrowellenschranken-System den jeweiligen Mikrowellenschranken einen jeweiligen Mikrowellen-Betriebs-Kanal so zuzuordnen, dass räumlich angrenzenden Mikrowellenschranken des Mikrowellenschranken-Systems Frequenz-Kanäle zugeordnet werden, dass eine gegenseitige Störung durch Mikrowellen-Einstrahlung räumlich benachbarter Mikrowellenschranken in dem Mikrowellenschranken-System vermindert wird. Dabei beschreibt die Anordnung der jeweiligen Mikrowellenschranken in dem Mikrowellenschranken-System einen jeweiligen gegenseitigen Abstand und/oder eine jeweilige räumliche Orientierung und/oder eine jeweilige Ausdehnung der Vielzahl der Mikrowellenschranken des Mikrowellenschranken-Systems.

Gemäß einem Aspekt wird vorgeschlagen, dass das Mikrowellenschranken-System eingerichtet ist, die Mikrowellen-Frequenz-Kanäle des zugewiesenen und/oder verfügbaren Mikrowellen-Frequenzspektrums so auf die jeweiligen Mikrowellenschranken verteilt werden, dass räumlich benachbarte Mikrowellenschranken Mikrowellen-Frequenz-Kanäle zugewiesen werden, die frequenzmäßig möglichst weit auseinanderliegen, um eine gegenseitige Störung der zumindest zwei Mikrowellenschranken in dem Mikrowellenschranken-System zu minimieren.

Eine jeweilige Mikrowellenschranke kann eine Mikrowellen-Sendeeinheit aufweisen, die ein Mikrowellen-Signal generiert und in Richtung auf eine jeweilige zugeordnete Mikrowellen-Empfangseinheit ausstrahlt. Die räumlich von der jeweiligen Mikrowellen-Sendeeinheit getrennte Mikrowellen-Empfangseinheit der jeweiligen Mikrowellenschranke kann der Mikrowellen-Sendereinheit zugeordnet sein. Zwischen der jeweiligen Mikrowellen-Sendeeinheit und der jeweiligen zugeordneten Mikrowellen-Empfangseinheit kann ein jeweiliger Kopplungs-Pfad definiert werden, der den räumlichen Bereich charakterisiert, in dem die jeweilige Mikrowellen-Sendeeinheit und die jeweilige Mikrowellen-Empfangseinheit mittels des Mikrowellen-Signals betriebsmäßig gekoppelt sind. Wird der direkte Übertragungsweg im Kopplungs-Pfad von der jeweiligen Mikrowellen-Sendeeinheit zu der jeweiligen Mikrowellen-Empfangseinheit durch ein Objekt und/oder durch einen Füllstand eines Mediums in einem Behälter unterbrochen, kann dies durch einen fehlenden Empfangspegel oder einen reduzierten Empfangspegel des Mikrowellen-Signals entsprechend einer Dämpfung in der jeweiligen zugeordneten Mikrowellen-Empfangseinheit detektiert werden. Dieses Abfallen des Empfangspegels kann in der jeweiligen zugeordneten Mikrowellen-Empfangseinheit detektiert werden und beispielsweise in ein jeweiliges Schaltsignal, insbesondere zur Prozessüberwachung, umgewandelt werden. 2 Beispielsweise können mit diesem Verfahren eine Vielzahl von benachbarten Mikrowellenschranken die jeweiligen Mikrowellen-Betriebs-Kanäle aus den Mikrowellen-Frequenzen so bestimmen, dass benachbarte Mikrowellenschranken frequenzmäßig nicht benachbarte Mikrowellen-Betriebs-Kanäle zugeordnet werden, um eine Störbeeinflussung zu minimieren. D. h. mit anderen Worten, benachbarte unabhängige Mikrowellenschranken senden nach der Bestimmung der jeweiligen Mikrowellen-Betriebs-Kanäle nicht in benachbarten Frequenz-Kanälen.

Gemäß einem Aspekt wird vorgeschlagen, dass die Empfangseinheit zumindest einer Mikrowellenschranke eingerichtet ist, die Dämpfung des Mikrowellen-Signals basierend auf einem zugeordneten Mikrowellen-Betriebs-Kanal zu bestimmen. Vorzugsweise kann der Mikrowellen-Betriebs-Kanal mittels der Empfangseinheit bestimmt und/oder selektiert werden. Besonders vorzugsweise kann der Mikrowellen-Betriebs-Kanal der Mikrowellenschranke von dem Mikrowellenschranken-System zugeordnet werden.

Die Mikrowellenschranke kann eingerichtet sein, Mikrowellen-Signale einer anderen Mikrowellenschranke, deren Betrieb auf einem anderen Mikrowellen-Betriebs-Kanal basiert, herausfiltern, um eine gegenseitige Störung der jeweiligen Mikrowellenschranken zu vermindern. Eine solche Selektion des Mikrowellen-Betriebs-Kanals durch die Mikrowellen-Empfangseinheit kann, insbesondere mittels eines Zwischenfrequenz-Filters der jeweiligen Mikrowellen-Empfangseinheit, durchgeführt werden.

Gemäß einem Aspekt wird vorgeschlagen, dass das Mikrowellenschranken-System eingerichtet ist, abhängig von der bereitgestellten Anordnung der jeweiligen Mikrowellenschranken in dem Mikrowellenschranken-System den Mikrowellenschranken Mikrowellen-Betriebs-Kanäle so zuzuordnen, dass jeweils räumlich aneinander angrenzenden Mikrowellenschranken des Mikrowellenschranken-Systems frequenzmäßig nicht angrenzende Mikrowellen-Frequenz-Kanäle zugeordnet werden. Vorteilhafterweise kann dadurch erreicht werden, dass die gegenseitige Störung der Mikrowellenschranken vermindert wird.

Gemäß einem Aspekt wird vorgeschlagen, dass die jeweilige Mikrowellen-Empfangseinheit eingerichtet ist, eine Fremdsignal-Amplitude für zumindest einen Mikrowellen-Betriebs-Kanal einer Vielzahl verfügbaren Mikrowellen-Betriebs-Kanäle zu bestimmen; und der Mikrowellen-Betriebs-Kanal aus den verfügbaren Frequenz-Kanälen, basierend auf der zumindest einen bestimmten Fremdsignal-Amplitude der verfügbaren Mikrowellen-Betriebs-Kanäle bestimmt wird, um Störungen bei einem Betreiben der jeweiligen Mikrowellenschranke durch ein Fremdsignal zu vermindern.

Dazu kann die Mikrowellenschranke eingerichtet sein, für die Bestimmung der Fremdsignal-Amplitude die Mikrowellen-Sendeeinheit zu deaktivieren. Abhängig von dem bestimmten Fremdsignal kann der Mikrowellen-Betriebs-Kanal so zugeordnet werden, dass eine jeweilige Mikrowellenschranke mit einer Mikrowellen-Frequenz betrieben wird, bei der ein möglichst geringes Fremdsignal bestimmt wurde.

Gemäß einem Aspekt wird vorgeschlagen, dass die Mikrowellen-Empfangseinheit mit der Mikrowellen-Sendeeinheit mittels der Kommunikationseinheit drahtgebunden und/oder mittels der Kommunikationseinheit drahtlos, insbesondere drahtlos via Bluetooth und/oder drahtlos via WLAN und/oder drahtgebunden mittels einer jeweiligen Energie-Versorgungsleitung, signalmäßig miteinander gekoppelt zu werden.

Die Energie-Versorgungsleitung kann eine elektrische Leitung sein, mit der die Mikrowellen-Empfangseinheit und/oder die Mikrowellen-Sendeeinheit mit elektrischer Energie versorgt werden.

Die signalmäßige Kopplung zwischen der Mikrowellen-Sendereinheit und der Mikrowellen-Empfangseinheit kann eingerichtet sein, monodirektionale oder bidirektionale Kommunikation zwischen der Mikrowellen-Empfangseinheit und der Mikrowellen-Sendeeinheit und/oder der Mikrowellen-Sendeeinheit und der Mikrowellen-Empfangseinheit bereitzustellen.

Eine jeweilige Mikrowellen-Sendeeinheit einer jeweiligen Mikrowellenschranke kann eingerichtet sein, mittels des Mikrowellen-Signals Informationen an die Mikrowellen-Empfangseinheit zu übertragen, in dem die jeweilige Mikrowellen-Sendereinheit das Mikrowellen-Signal mit den Informationen moduliert und/oder die Mikrowellen-Empfangseinheit eingerichtet sein, das modulierte Mikrowellen-Signal selektiv zu demodulieren, um die Informationen zu empfangen.

Gemäß einem Aspekt wird vorgeschlagen, dass die jeweilige Kommunikationseinheit der jeweiligen Mikrowellenschranke und/oder die Kommunikationseinheit des Mikrowellenschranken-Systems eingerichtet ist, die jeweilige Mikrowellen-Empfangseinheit mit einer weiteren Mikrowellenschranke signalmäßig zu koppeln, um den Mikrowellen-Betriebs-Kanal für den Betrieb der weiteren Mikrowellenschranke, festzulegen und/oder den Betriebskanal an die weitere Mikrowellenschranke zu übertragen und/oder um eine von der Empfangseinheit der weiteren Mikrowellenschranke bestimmte Fremdsignal-Amplitude an die jeweilige Mikrowellenschranke zu übertragen und/oder die bestimmte Fremdsignalamplitude der jeweiligen Mikrowellenschranke an die weitere Mikrowellenschranke zu übertragen.

Mittels der so eingerichteten Kommunikationseinheit kann eine ausgewählte Mikrowellen-Sendeeinheit des Mikrowellenschranken-Systems und/oder eine ausgewählte Mikrowellen-Empfangseinheit des Mikrowellenschranken-Systems eingerichtet sein, insbesondere entsprechend einem Master-Slave-Verfahren, die Betriebs-Kanäle für eine Vielzahl von Mikrowellenschranken zu bestimmen, und an die jeweiligen Mikrowellen-Sendeeinheiten der Vielzahl der Mikrowellenschranken zu übertragen.

Gemäß einem Aspekt wird vorgeschlagen, dass die erste Mikrowellenschranke räumlich benachbart zu der zweiten Mikrowellenschranke angeordnet ist; und das Mikrowellenschranken-System eingerichtet ist, den Mikrowellen-Betriebs-Kanal der ersten Mikrowellenschranke zu bestimmen, während die Mikrowellen-Sendeeinheit der zweiten Mikrowellenschranke auf einem zweiten Mikrowellen-Betriebs-Kanal betrieben wird. Dadurch kann die jeweilige Störung durch die zweite Mikrowellenschranke bestimmt werden und ein Mikrowellen-Betriebs-Kanal für die erste Mikrowellenschranke bestimmt werden, so dass eine gegenseitige Störung der Mikrowellenschranken vermindert wird.

Gemäß einem Aspekt wird vorgeschlagen, dass Stör-Strahlung, die durch einen Betrieb der Sendeeinheit der zweiten Mikrowellenschranke auf dem zweiten Betriebs-Kanal hervorgerufen wird, von der ersten Mikrowellenschranke als Fremdsignal-Amplitude interpretiert wird, um den Mikrowellen-Betriebs-Kanal für die erste Mikrowellenschranke zu bestimmen.

Der Betriebs-Kanal der ersten Mikrowellenschranke kann somit aus den verfügbaren Mikrowellen-Betriebs-Kanälen abhängig von der gemessenen Fremdsignal-Amplitude in den einzelnen Mikrowellen-Betriebs-Kanälen bestimmt werden.

Gemäß einem Aspekt wird vorgeschlagen, dass die Mikrowellenschranke mittels der jeweiligen Kommunikationseinheit eingerichtet ist, eine Diagnoseinformation von der jeweiligen Mikrowellen-Sendeeinheit an die jeweilige Mikrowellen-Empfangseinheit zu übertragen, um eine Fehlfunktion der jeweiligen Mikrowellenschranke zu vermeiden und/oder zu bestimmen.

Die signalmäßige Kopplung der Mikrowellen-Sendereinheit mit der Mikrowellen-Empfangseinheit mittels der Kommunikationseinheit einer Mikrowellenschranke kann eingerichtet sein, zusätzlich Diagnoseinformationen zu übertragen. Beispielsweise kann die Mikrowellen-Sendeeinheit bei einem Defekt auf der Seite der Mikrowellen-Sendeeinheit der Mikrowellen-Empfangseinheit eine Störungsmeldung übermitteln, sodass die Mikrowellen-Empfangseinheit einem Anwender eine Störmeldung signalisieren und/oder bereitstellen kann. Zusätzlich kann die Mikrowellen-Empfangseinheit eingerichtet sein, bei Vorliegen einer bestimmten Diagnoseinformation, kein Schaltsignal zu generieren, obwohl die durch die Mikrowellen-Empfangseinheit bestimmte Dämpfung der Mikrowellen-Frequenz des Mikrowellen-Betriebs-Kanals einen definierten Schwellwert überschreitet, da die Diagnoseinformation einen Fehler der Mikrowellen-Sendereinheit übermittelt hat.

Gemäß einem Aspekt wird vorgeschlagen, dass eine Mikrowellenschranke mittels der Kommunikationseinheit eingerichtet ist, eine Mikrowellen-Sendeleistung der Mikrowellen-Sendeeinheit von der Mikrowellen-Sendereinheit an die Mikrowellen-Empfangseinheit zu übertragen. Durch Anpassung der Mikrowellen-Sendeleistung kann ein Signal/Rauschabstand von einem Fremdsignal verbessert werden und/oder eine gegenseitige Störung von Mikrowellenschranken im Mikrowellenschranken-System vermindert werden. Alternativ oder zusätzlich kann mittels der Übertragung der Sendeleistung an die Mikrowellen-Empfangseinheit die Empfindlichkeit für ein Auslösen der Mikrowellenschranke an die Sendeleistung angepasst werden.

Gemäß einem Aspekt wird vorgeschlagen, dass die jeweilige Mikrowellen-Empfangseinheit mit der jeweiligen Mikrowellen-Sendeeinheit mittels eines Mikrowellen-Signals, basierend auf dem jeweiligen Mikrowellen-Betriebs-Kanal, gekoppelt ist, um einen Kopplungs-Pfad zwischen der jeweiligen Mikrowellen-Sendeeinheit und der jeweiligen Empfangseinheit aufzubauen. Insbesondere kann das Mikrowellenschranken-System eingerichtet sein, eine Dämpfung des Mikrowellen-Signals in dem jeweiligen Kopplungs-Pfad zu bestimmten. Vorzugsweise kann mit dem Mikrowellen-Signal eine Dämpfung im jeweiligen Kopplungs-Pfad der jeweiligen Mikrowellenschranke bestimmt werden.

Dabei kann die Kopplung mittels des Mikrowellen-Signals verschieden sein von der drahtgebundenen und/oder drahtlosen signalmäßigen Kopplung von Mikrowellen-Empfangseinheit und Mikrowellen-Sendereinheit und/oder der drahtgebundenen und/oder drahtlosen signalmäßigen Kopplung von Mikrowellen-Sendereinheit und Empfangseinheit, wobei die signalmäßige Kopplung insbesondere mittels der Kommunikationseinheit bereitgestellt werden kann.

Gemäß einem Aspekt wird vorgeschlagen, dass zumindest eine der Mikrowellenschranken des Mikrowellenschranken-Systems eingerichtet ist, basierend auf einem modulierten Mikrowellen-Signal betrieben zu werden, um eine gegenseitige Störung von zumindest zwei Mikrowellenschranken, die räumlich benachbart betrieben werden, in dem Mikrowellenschranken-System zu vermindern.

Dazu kann die Mikrowellen-Sendeeinheit der jeweiligen Mikrowellenschranke eingerichtet sein, basierend auf dem Mikrowellen-Betriebs-Kanal, ein moduliertes Mikrowellen-Signal zu generieren und/oder die jeweilige Mikrowellen-Empfangseinheit eingerichtet sein, basierend auf dem modulierten Mikrowellen-Signal, die Dämpfung des Mikrowellen-Signals zu bestimmen. Dabei kann das Mikrowellenschranken-System eingerichtet sein, dass eine jeweilige Mikrowellenschranke des Mikrowellenschranken-Systems eine Modulation des Mikrowellen-Signals aufweist, welches sich von einer Modulation der anderen Mikrowellenschranken unterscheidet.

Gemäß einem Aspekt wird vorgeschlagen, dass die erste Mikrowellenschranke und die zweite Mikrowellenschranke jeweils ein moduliertes Mikrowellen-Signal aufweisen, wobei sich die Modulation des Mikrowellen-Signals der ersten Mikrowellenschranke von der Modulation der zweiten Mikrowellenschranke unterscheidet.

Gemäß einem Aspekt wird vorgeschlagen, dass bei dem Mikrowellenschranken-System zumindest eine Mikrowellenschranke eingerichtet ist, die Mikrowellen-Sendeeinheit mit der zugeordneten und/oder gekoppelten Mikrowellen-Empfangseinheit, mittels des modulierten Mikrowellen-Signals zu koppeln, um Informationen von der Mikrowellen-Sendeeinheit zu der jeweils zugeordneten Empfangseinheit zu übertragen.

Dabei unterscheidet sich die Kopplung der Mikrowellen-Sendeeinheit zur Übertragung von Informationen von der operativen bzw. betriebsmäßigen Kopplung der Mikrowellen-Sendereinheit mit der Mikrowellen-Empfangseinheit zum Aufbau des Kopplung Pfads, indem bei der Kopplung zur Übertragung von Informationen mit einem modulierten Mikrowellen-Signal zusätzliche Informationen, die über den operativen Betrieb einer Mikrowellenschranke hinausgehen, an die Mikrowellen-Empfangseinheit übertragen wird. Insbesondere kann die Information, die an die Mikrowellen-Empfangseinheit von der Mikrowellen-Sendeeinheit übertragen wird, ein Betriebsstatus der Mikrowellen-Sendeeinheit und/oder eine Diagnoseinformation sein, um eine Fehlfunktion und/oder eine Fehlauslösung der Mikrowellenschranke zu vermeiden.

Gemäß einem Aspekt wird vorgeschlagen, dass die jeweilige Mikrowellenschranke eingerichtet ist, mittels des modulierten Mikrowellen-Signals eine Information über eine ausgesendete Mikrowellen-Leistung der Mikrowellen-Sendeeinheit an die Mikrowellen-Empfangseinheit zu übertragen, um durch die Übertragung der Mikrowellen-Leistung an die jeweilige Mikrowellen-Empfangseinheit, mittels der Mikrowellen Empfangseinheit, die Dämpfung im Kopplungs-Pfad zwischen der Mikrowellen-Sendeeinheit und der Mikrowellen-Empfangseinheit zu bestimmen.

Wenn die Mikrowellen-Leistung an die Empfangseinheit übertragen wird, lassen sich Rückschlüsse auf das Objekt im Übertragungsweg der Schranke ziehen, z.B. Rückschlüsse in Bezug auf die Größe des Objekts oder dessen Transparenz für das Mikrowellensignal.

Mit anderen Worten kann ein Aufbau der jeweiligen Mikrowellenschranke mit räumlich getrennt angeordneter Mikrowellen-Sendeeinheit und Mikrowellen-Empfangseinheit zur Datenübertragung entsprechend einer Richtfunkstrecke verwendet werden. Ein auf das Mikrowellen-Signal der Mikrowellen-Sendeeinheit aufmoduliertes Datensignal kann in der Empfängereinheit wieder demoduliert und ausgewertet werden. So lassen sich beispielsweise bei freier Übertragungsstrecke Diagnosedaten, wie z.B. eine Sendeleistung der Mikrowellen-Sendeeinheit, ein Wert einer aktuellen Versorgungsspannung, etc., von der Mikrowellen-Sendeeinheit übertragen werden und mittels der Empfangseinheit ausgewertet werden. Ein eventueller Ausfall der Mikrowellen-Sendeeinheit oder eine Degeneration der Übertragungsstrecke, kann so frühzeitig erkannt werden und wird somit nicht als "belegte Übertragungsstecke" bei fehlendem Signal am Empfänger missinterpretiert. Eine Degeneration des Übertragungsweges kann vorliegen, wenn z.B. ein Baum in die Übertragungsstrecke wächst und mit der Zeit das Sendesignal dadurch zunehmend gedämpft wird.

Gemäß einem Aspekt wird vorgeschlagen, dass die Mikrowellen-Sendeeinheit der zumindest einen Mikrowellenschranke eingerichtet ist, ein Mikrowellen-Signal zu generieren, das moduliert ist, und eine mit der so eingerichteten Sendeeinheit gekoppelten Empfangseinheit eingerichtet ist, die Dämpfung des Mikrowellen-Signals, basierend auf dem modulierten Mikrowellen-Signal, selektiv zu detektieren.

Entsprechend diesem Aspekt kann mittels des Mikrowellen-Signals eine Kennung von der Mikrowellen-Sendeeinheit an die Empfangseinheit übertragen werden, wobei die jeweilige Empfangseinheit eingerichtet ist die korrekte Kennung zu überprüfen, um eine gegenseitige Störung von Mikrowellenschranken zu vermindern. Dazu kann die jeweilige Mikrowellenschranke eingerichtet sein, basierend auf dem, mit der Kennung modulierten Mikrowellen-Signal, betrieben zu werden.

Gemäß einem Aspekt wird vorgeschlagen, dass das jeweilige Mikrowellen-Signal zumindest einer Mikrowellenschranke des Mikrowellenschranken-Systems mit einem Code moduliert ist, und die zumindest eine Mikrowellenschranke eingerichtet ist, basierend auf dem, mit dem Code modulierten Mikrowellen-Signal, insbesondere zur Bestimmung der Dämpfung in dem Kopplungs-Pfad der zumindest einen Mikrowellenschranke, betrieben zu werden. Mit anderen Worten kann die zumindest eine Mikrowellenschranke selektiv mit einem jeweiligen Mikrowellen-Signal, das mit dem Code moduliert ist, betrieben werden, um das jeweilige Mikrowellen-Signal von Mikrowellen-Signal anderer Mikrowellenschranken zu unterscheiden, um eine gegenseitige Störung der Mikrowellenschranken zu vermindern. Die jeweiligen Codes unterschiedlicher Mikrowellenschranken können sich dazu unterscheiden.

Gemäß einem Aspekt wird vorgeschlagen, dass eine einzelne Mikrowellen-Empfangseinheit sowohl die Mikrowellen-Empfangseinheit der ersten Mikrowellenschranke als auch die Mikrowellen-Empfangseinheit der zweiten Mikrowellenschranke ist.

Mit einer einzelnen Mikrowellen-Empfangseinheit für eine Vielzahl von Mikrowellen-Sendeeinheiten, die jeweils auf die einzelne Mikrowellen-Empfangseinheit ausgerichtet ist, um eine Vielzahl von Kopplung-Pfaden zu bilden, kann ein Mikrowellenschranken-System mit einem reduzierten Hardwareaufwand konfiguriert werden. Beispielsweise können vier Mikrowellen-Sendeeinheiten mit einer Mikrowellen-Empfangseinheit kombiniert werden, um vier Mikrowellenschranken mit vier Kopplungs-Pfaden zu realisieren. Mit einer solchen Konfiguration von Mikrowellenschranken kann eine Position eines Objektes im Raum oder ein Füllstand in einem Behälter bestimmt werden. Der Hardwareaufwand ist jedoch in diesem Beispiel um insgesamt drei Mikrowellen-Empfangseinheiten reduziert. Jeder Mikrowellen-Sendeeinheit kann bei dieser Konfiguration ein eigener Mikrowellen-Betriebs-Kanal zugeordnet werden, wobei die Mikrowellen-Empfangseinheit beispielsweise sequenziell, oder mit einer beliebigen anderen Zugriffsart, auf die einzelnen zugeordneten Mikrowellen-Betriebs-Kanäle abgestimmt wird, um das von den einzelnen Mikrowellen-Sendeeinheiten abgestrahlte Mikrowellen-Signal, insbesondere in Bezug auf seine Leistung, zu bestimmen. Dadurch kann das abgestrahlte Mikrowellen-Signal bestimmt werden, ohne von den Mikrowellen-Sendeeinheiten, die auf anderen Mikrowellen-Betriebs-Kanälen betrieben werden, gestört zu werden. Die gemeinsame Mikrowellen-Empfangseinheit kann die bestimmten Mikrowellen-Signale, entsprechend den einzelnen Mikrowellen-Betriebs-Kanälen, an einen Nutzer des Mikrowellenschranken-Systems melden oder anderweitig ausgeben. Wird der Übertragungsweg von einer beliebigen Mikrowellen-Sendeeinheit zu der gemeinsam genutzten Mikrowellen-Empfangseinheit durch ein Objekt oder einen Füllstand eines Mediums unterbrochen oder gedämpft, verringert sich die empfangene Leistung des Mikrowellen-Signals und beim Unterschreiten einer Schwelle für diese Leistung kann die Mikrowellen-Empfangseinheit eingerichtet sein, ein Schaltsignal zu generieren.

Gemäß einem Aspekt wird vorgeschlagen, dass das jeweilige Mikrowellen-Signal der jeweiligen Mikrowellenschranke in Bezug auf eine Amplitude und/oder eine Frequenz und/oder eine Phase einer Frequenz des Mikrowellen-Signals moduliert ist; und/oder das jeweilige Mikrowellen-Signal zeitlich moduliert ist. Mit einer solchen Modulation kann sowohl eine Kennung als auch ein Code übertragen werden. Dabei kann die Kennung als eine Modulation verstanden werden, die das jeweilige Mikrowellensignal permanent kennzeichnet. Der Code kann als eine Modulation bezeichnet werden, die das jeweilige Mikrowellensignal temporär, insbesondere periodisch wiederholt, kennzeichnet.

Gemäß einem Aspekt wird vorgeschlagen, dass die Mikrowellen-Sendeeinheit zumindest einer Mikrowellenschranke des Mikrowellenschranken-Systems eingerichtet ist, und/oder eine Empfangseinheit der zumindest einen Mikrowellenschranke eingerichtet ist, mittels eines Mikrowellen-Transceivers, sowohl als Mikrowellen-Sendeeinheit als auch Empfangseinheit betrieben zu werden.

Mittels eines solchen Mikrowellen-Transceivers kann die jeweilige Mikrowellenschranke das Mikrowellen-Signal in die unterschiedlichen Richtungen des Kopplung-Pfades abstrahlen und empfangen, um eine gegenseitige Störung von Mikrowellenschranken zu vermindern, ohne mechanisch die Anordnung der Mikrowellenschranke zu verändern.

Gemäß einem Aspekt wird vorgeschlagen, dass das Mikrowellenschranken-System eingerichtet ist, die Mikrowellen-Betriebs-Kanäle den jeweiligen Mikrowellen-Sendeeinheiten der jeweiligen Mikrowellenschranken, und insbesondere den Mikrowellen-Empfangseinheiten, des Mikrowellenschranken-Systems zeitlich aufeinanderfolgend und/oder zeitlich zyklisch zuzuordnen.

Dabei kann eine zeitlich zyklische Zuordnung eine Zuordnung sein, die jeweils nach Ablauf eines Zeitintervalls erfolgt. Diese Zuordnung des jeweiligen Mikrowellen-Betriebs-Kanals zu den jeweiligen Mikrowellenschranken kann bei einem Betriebsstart des Mikrowellenschranken-Systems erfolgen und/oder anschließend an eine von dem Mikrowellenschranken-System detektierten Störung erfolgen. D. h. das Mikrowellenschranken-System kann eingerichtet sein, Störungen in den jeweiligen Mikrowellenschranken zu detektieren und/oder basierend auf einer detektierten Störung Mikrowellen-Betriebs-Kanäle den jeweiligen Mikrowellenschranken zuzuordnen und insbesondere den jeweiligen Mikrowellenschranken zu übermitteln.

Gemäß einem Aspekt wird vorgeschlagen, dass beide Funktions-Einheiten der jeweiligen Mikrowellenschranke, d. h. sowohl die Mikrowellen-Sendeeinheit als auch die jeweilige Mikrowellen-Empfangseinheit der Mikrowellenschranke basierend auf sogenannte Transceiver ausgebildet sind.

In diesem Fall ist eine bidirektionale Datenübertragung, insbesondere basierend auf unterschiedlichen Mikrowellen-Betriebs-Kanälen, möglich. Beide Funktions-Einheiten der jeweiligen Mikrowellenschranke können sich in diesem Fall beispielsweise gegenseitig überwachen. Fällt eine dieser Funktions-Einheiten aus, kann eine Fehlinterpretation eines belegten Kopplung-Pfades, bzw. einer Übertragungsstrecke, verhindert werden.

Gemäß einem Aspekt wird vorgeschlagen, dass die jeweiligen Mikrowellenschranken des Mikrowellenschranken-Systems mit einer Auswerte-Einheit des Mikrowellenschranken-Systems gekoppelt sind, um die unterschiedliche Positionen zumindest eines Objektes und/oder eine Bewegung des Objektes zu detektieren.

Die jeweilige Mikrowellen-Sendeeinheit einer jeweiligen Mikrowellenschranke kann eingerichtet sein, insbesondere mittels einer elektrischen Abstimmung eines Mikrowellen-Generators der Mikrowellen-Sendeeinheit, mit einer wählbaren Mikrowellen-Frequenz betrieben zu werden. Zusätzlich oder alternativ kann die jeweilige Mikrowellen-Empfangseinheit einer jeweiligen Mikrowellenschranke eingerichtet sein, insbesondere mittels einer elektrischen Abstimmung eines Mikrowellen-Generators der Mikrowellen-Empfangseinheit, mit einer wählbaren Mikrowellen-Frequenz betrieben zu werden, um ein von der Empfangseinheit empfangenes Mikrowellen-Signal selektiv, insbesondere in Bezug auf einen Mikrowellen-Betriebs-Kanal, für einen Betrieb der Mikrowellenschranke auszuwerten und/oder zu bestimmen.

Dadurch kann die erste Mikrowellenschranke eingerichtet sein, mit dem Mikrowellen-Betriebs-Kanal betrieben zu werden und den Mikrowellen-Betriebs-Kanal aus Fremdsignalen herauszufiltern, um eine Störung der ersten Mikrowellenschranken durch Fremdsignale zu vermindern. Eine solche Selektion des Mikrowellen-Betriebs-Kanals kann durch die Mikrowellen-Empfangseinheit mittels eines Zwischenfrequenz-Filters durchgeführt werden.

Die Fremdsignale können insbesondere durch eine, mittels der Mikrowellen-Empfangseinheit bestimmten, Fremdsignal-Amplitude charakterisiert werden. Um Störungen, insbesondere des zuverlässigen Betriebes der betreffenden Mikrowellenschranke, zu minimieren und somit den Störabstand bzw. den Signal-Rauschabstand möglichst groß zu machen, sollte die Fremdsignal-Amplitude in dem bestimmten Mikrowellen-Betriebs-Kanal möglichst klein sein.

Für das Bestimmen des Mikrowellen-Betriebs-Kanals kann die Mikrowellen-Empfangseinheit eingerichtet sein, die jeweilige Fremdsignal-Amplitude für zumindest einen Teil der Vielzahl der verfügbaren Frequenz-Kanäle zu bestimmen, um Störungen bei dem Betreiben der ersten Mikrowellenschranke durch Fremdsignale zu minimieren. Beispielsweise kann derjenige verfügbare Mikrowellen-Betriebs-Kanal als Mikrowellen-Betriebs-Kanal ausgewählt werden, der eine möglichst geringe Fremdsignal-Amplitude aufweist.

Dazu kann die erste Mikrowellenschranke eingerichtet sein, eine Sequenz zum Aktivieren der ersten Mikrowellenschranke zu durchlaufen, die als Startsequenz und/oder zeitlich zyklisch wiederholt durchlaufen werden kann. Die Mikrowellen-Empfangseinheit kann eingerichtet sein, in einer Phase der Sequenz zum Aktivieren die jeweils zugehörige Mikrowellen-Sendeeinheit zu deaktivieren, um die Bestimmung der Fremdsignal-Amplitude zu verbessern.

Beispielsweise kann die Sequenz zum Aktivieren des Mikrowellenschranken-Systems die folgenden Schritte nach einem Starten der Mikrowellenschranke oder nach einer Störung der Mikrowellenschranke aufweisen:
- Prüfen zumindest eines Teiles der verfügbaren Mikrowellen-Betriebs-Kanäle auf eine Amplitude eines Fremdsignals;
- Bestimmen des Signal-/Rauschverhältnis für den jeweiligen Mikrowellen-Betriebs-Kanal;
- wiederholen dieser Prüfung, bis ein Mikrowellen-Betriebs-Kanal gefunden ist, in dem basierend auf der bestimmten Amplitude des Fremdsignals ein ausreichend hohes Signal-/Rauschverhältnis auf diesem Mikrowellen-Betriebs-Kanal erreicht werden kann;
- bestimmen dieses Mikrowellen-Betriebs-Kanals für den Betrieb der jeweiligen Mikrowellenschranke;
- zusätzlich kann die Information über die Amplitude der Fremdsignale in den unterschiedlichen verfügbaren Frequenz-Kanälen für die jeweilige Mikrowellenschranke gespeichert werden.

Insbesondere kann die jeweilige Mikrowellenschranke und/oder das Mikrowellenschranken-Systems eingerichtet sein, der für den Betrieb bestimmte Mikrowellen-Betriebs-Kanal und/oder Amplituden von Fremdsignalen der jeweiligen Mikrowellenschranke an eine andere Mikrowellenschranke des Mikrowellenschranken-Systems zu übertragen, um die jeweiligen Mikrowellen-Betriebs-Kanäle so zuzuordnen, dass eine gegenseitige Störung der Mikrowellenschranken vermindert wird.

Das Signal-/Rauschverhältnis kann durch Bestimmen der Fremdsignal-Amplitude im Verhältnis zu einem gespeicherten Mikrowellen-Empfangssignal und/oder zu einem, insbesondere mittels der Mikrowellen-Empfangseinheit, bestimmten Mikrowellen-Empfangssignal bei aktivierter Mikrowellen-Sendeeinheit bestimmt werden.

Bei der Bestimmung der Betriebs-Kanäle in einem System mit einer Vielzahl von Mikrowellenschranken können verfügbare Frequenz-Kanäle an einige der Vielzahl der Mikrowellenschranken auch doppelt vergeben werden. Dies kann insbesondere dann der Fall sein, wenn die betreffenden Mikrowellenschranken mit gleichem Mikrowellen-Betriebs-Kanal räumlich weit getrennt voneinander in dem System aus Mikrowellenschranken angeordnet sind.

In einer Sequenz zum Aktivieren des Mikrowellenschranken-Systems, können Mikrowellen-Sendeeinheiten von einzelnen Mikrowellenschranken oder von allen Mikrowellenschranken phasenweise deaktiviert und aktiviert werden.

Die Sequenz zum Aktivieren der Mikrowellenschranke kann auch während des laufenden Betriebs durchlaufen werden, um einen automatischen Wechsel der Mikrowellen-Betriebs-Kanäle zu erreichen, und damit Störungen durch Fremdsignale zu vermindern.

Gemäß einem Aspekt wird vorgeschlagen, dass die jeweiligen Mikrowellenschranken eines Systems einer Vielzahl von Mikrowellenschranken mit einer Auswerte-Einheit gekoppelt sind, um die unterschiedliche Positionen zumindest eines Objektes und/oder eine Bewegung des Objektes zu detektieren. Alternativ oder zusätzlich kann eine Mikrowellenschranke der Vielzahl der Mikrowellenschranken eingerichtet sein, die unterschiedlichen Positionen zumindest eines Objektes und/oder eine Bewegung des Objektes zu detektieren.

Gemäß einem Aspekt wird vorgeschlagen, dass die zweite Mikrowellenschranke eingerichtet ist, eines der oben beschriebenen Verfahren, entsprechend der ersten Mikrowellenschranke, durchzuführen.

Es wird ein Verfahren zum Betreiben eines Mikrowellenschranken-Systems vorgeschlagen, das eine erste Mikrowellenschranke aufweist, wobei die erste Mikrowellenschranke eingerichtet ist, mit einer wählbaren Mikrowellen-Frequenz betrieben zu werden und zumindest eine zweite Mikrowellenschranke aufweist, wobei die zweite Mikrowellenschranke eingerichtet ist, mit einer wählbaren Mikrowellen-Frequenz betrieben zu werden, mit den Schritten:
- Bereitstellen einer Anzahl von Mikrowellenschranken und/oder einer Anordnung von Mikrowellenschranken, die in dem Mikrowellenschranken-System betrieben werden;
- Bereitstellen eines verfügbaren Frequenzbereichs für den Betrieb des Mikrowellenschranken-Systems;
- Bestimmen von verfügbaren Mikrowellen-Betriebs-Kanälen für den Betrieb des Mikrowellenschranken-Systems;
- Zuordnen der verfügbaren Mikrowellen-Betriebs-Kanälen zu der jeweiligen Mikrowellenschranke in so einer Weise, dass eine gegenseitige Störung der Mikrowellenschranken verringert wird.
- Gemäß einem Aspekt kann das Verfahren den anschließenden Schritt aufweisen
- Übertragen des bestimmten Betriebs-Kanals von der Mikrowellen-Empfangseinheit an die Mikrowellen-Sendeeinheit, zum Betreiben der ersten Mikrowellenschranke auf dem Betriebs-Kanal.

Dabei kann die Zuordnung der verfügbaren Mikrowellen-Betriebs-Kanälen abhängig von einer Anordnung und/oder einer Anzahl der Mikrowellenschranken erfolgen, um eine gegenseitige Störung der Mikrowellenschranken zu verringern, indem die verfügbaren Mikrowellen-Betriebs-Kanäle gleichmäßig auf die Anzahl der Mikrowellenschranken verteilt werden und/oder angrenzend angeordneten Mikrowellenschranken möglichst unterschiedliche Mikrowellen-Betriebs-Kanäle in Bezug auf die jeweilige Frequenz zugeordnet werden.

Gemäß einem Aspekt kann das Verfahren zum Auswählen eines Betriebs-Kanals für eine erste Mikrowellenschranke zusätzlich oder alternativ die Schritte aufweisen
- Bestimmen einer Fremdsignal-Amplitude für zumindest einen Frequenz-Kanal der Vielzahl der verfügbaren Frequenz-Kanäle mittels der Mikrowellen-Empfangseinheit;
- Bestimmen eines Mikrowellen-Betriebs-Kanals, ausgewählt aus den verfügbaren Frequenz-Kanälen, und basierend auf der zumindest einen bestimmten Fremdsignal-Amplitude der verfügbaren Frequenz-Kanäle, um Störungen bei einem Betreiben der ersten Mikrowellenschranke durch ein Fremdsignal zu minimieren

Gemäß einem Aspekt wird vorgeschlagen, dass das Verfahren zusätzlich die Schritte aufweist:
- Bereitstellen einer Anordnung der jeweiligen Mikrowellenschranken in dem Mikrowellenschranken-System;
- Zuordnen der Mikrowellen-Frequenz-Kanäle zu räumlich angrenzenden Mikrowellenschranken, so dass eine gegenseitige Störung durch Mikrowellen-Einstrahlung räumlich benachbarter Mikrowellenschranken in dem Mikrowellenschranken-System vermindert wird; und zusätzlich oder optional:
- Zuordnen der Mikrowellen-Frequenz-Kanäle an die jeweiligen Mikrowellenschranken der Anzahl der Mikrowellenschranken so, dass jeweils räumlich aneinander angrenzenden Mikrowellenschranken des Mikrowellenschranken-Systems frequenzmäßig nicht angrenzende Frequenz-Kanäle zugeordnet werden.

Es wird ein Computerprogramm vorgeschlagen, welches Befehle umfasst, die bei der Ausführung des Computerprogramms durch einen Computer diesen veranlassen, eines der oben beschriebenen Verfahren auszuführen.

Mit einem solchen Computerprogramm kann das Verfahren einfach in unterschiedlichen Umgebungen und/oder Anwendungen und/oder Plattformen implementiert werden.

Es wird ein computerlesbarer Datenträger vorgeschlagen, auf dem das oben beschriebene Computerprogramm gespeichert ist.

Dadurch kann das Verfahren leicht auf unterschiedliche Steuer- und Kontrollgeräte implementiert werden.

Es wird eine Verwendung eines der oben beschriebenen Mikrowellenschranken-Systeme zur Überwachung einer Position eines Objektes vorgeschlagen, wobei das Objekt insbesondere Schüttgut ist.

Durch die Verwendung des Mikrowellenschranken-Systems zur Überwachung einer Position eines Objektes kann ein Produktionsprozess besonders sicher überwacht werden.

### Ausführungsbeispiele

Ausführungsbeispiele der Erfindung werden mit Bezug auf die Figuren 1 bis 6 dargestellt und im Folgenden näher erläutert. Es zeigt:
- Figur 1: eine Mikrowellenschranke des Mikrowellenschranken-Systems mit Kommunikationseinheiten;
- Figur 2a: eine Anzahl von Mikrowellen-Frequenz-Kanälen;
- Figur 2b: ein Diagramm mit Mikrowellen-Frequenz-Kanälen;
- Figur 2c: ein Leistungsdiagramm von Frequenz-Kanälen;
- Figur 3: ein Mikrowellenschranken-System;
- Figur 4: ein weiteres Mikrowellenschranken-System;
- Figur 5: einen Sender einer Mikrowellenschranke; und
- Figur 6: einen Empfänger einer Mikrowellenschranke.

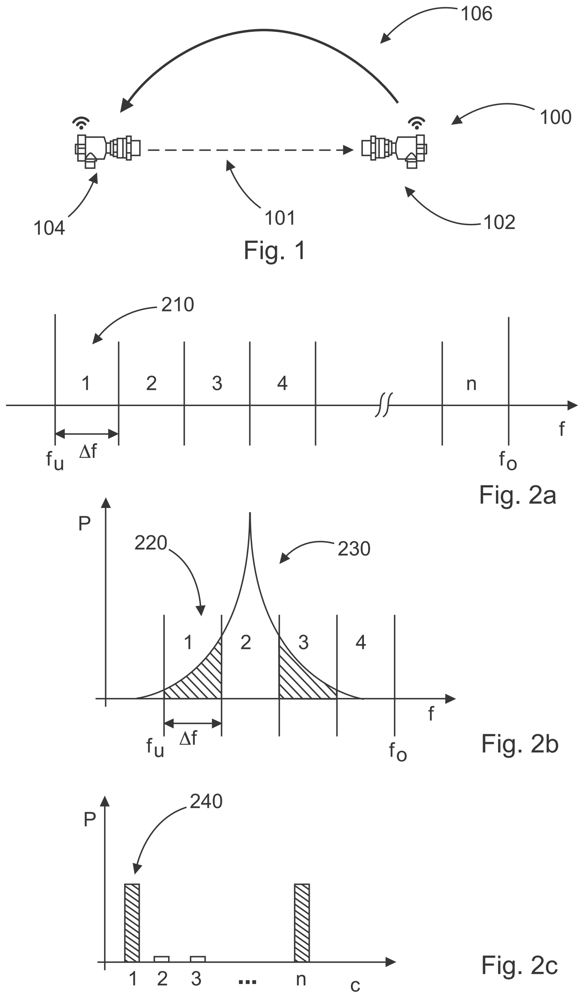

Die Figur 1 skizziert schematisch eine Mikrowellenschranke 100 eines Mikrowellenschranke eines Mikrowellenschranken-Systems mit einer Mikrowellen-Sendeeinheit 104 und einer Mikrowellen-Empfangseinheit 102, die mit einer Kommunikationseinheit eingerichtet ist, die Mikrowellen-Empfangseinheit 102 mit der Mikrowellen-Sendeeinheit 104 signalmäßig zu koppeln 106, um einen Betriebs-Kanal für den Betrieb der Mikrowellenschranke 100 von der Mikrowellen-Empfangseinheit 102 an die Mikrowellen-Sendereinheit 104 zu übertragen. Die Mikrowellen-Empfangseinheit 102 und die Mikrowellen-Sendereinheit 104 sind für den Betrieb der Mikrowellenschranke über einen Kopplungs-Pfad 101, indem Mikrowellenstrahlung von der Mikrowellen-Sendeeinheit 104 auf die Mikrowellen-Empfangseinheit 102 gerichtet ist, betriebsmäßig gekoppelt, insbesondere um ein Objekt im Kopplungs-Pfad 101 zu detektieren.

In einer Startsequenz kann die Mikrowellen-Empfangseinheit 102 einen Teil oder alle verfügbaren Mikrowellen-Betriebs-Kanäle scannen, während die Mikrowellen-Sendeeinheit 104 deaktiviert ist, um in zumindest einem Teil der verfügbaren Mikrowellen-Betriebs-Kanäle eine jeweilige Fremdsignal-Amplitude zu bestimmen. Die bestimmte Fremdsignal-Amplitude kann dabei von anderen benachbarten Mikrowellenschranken verursacht sein oder von anderen Funkdiensten stammen. Beide Ursachen würden den Betrieb der Mikrowellenschranke jedoch stören können. Wenn die Mikrowellen-Empfangseinheit 102 einen geeigneten Mikrowellen-Betriebs-Kanal bestimmt hat, um Störungen bei einem Betreiben der Mikrowellenschranke durch Fremdsignale zu minimieren, überträgt sie den Mikrowellen-Betriebs-Kanal an die Mikrowellen-Sendeeinheit 104 mittels der Kommunikationseinheit an die Mikrowellen-Sendereinheit der jeweiligen Mikrowellenschranke.

Die Figur 2a skizziert schematisch einen Wertebereich von Mikrowellen-Frequenzen f, die für einen Betrieb einer Mikrowellenschranke zugelassen sind, mit einer unteren Frequenz fu und einer oberen Frequenz fo, die in einer Anzahl von n Mikrowellen-Frequenz-Kanälen mit einer jeweiligen Breite von Δf aufgeteilt sind. Einer jeweiligen Mikrowellenschranke in einem Mikrowellenschranken-System kann entsprechend ein Mikrowellen-Betriebs-Kanal in diesem Wertebereich von Mikrowellen-Frequenzen f zugeordnet werden, um eine gegenseitige Störung der Mikrowellenschranken zu minimieren.

Die Figur 2b skizziert schematisch ein Diagramm mit Mikrowellen-Betriebs-Kanälen entsprechend Figur 2a, wobei der zulässige Frequenzbereich zwischen einer unteren Frequenz fu und einer oberen Frequenz fo in vier Mikrowellen-Betriebs-Kanäle unterteilt wurde. Zusätzlich ist über der Frequenz eine Leistung, bzw. ein Leistungsspektrum P 230 einer Mikrowellen-Sendereinheit einer Mikrowellenschranke aufgetragen, der ein Mikrowellen-Betriebs-Kanal mit der Nummer 2 zugeordnet wurde und entsprechend eine Mikrowellenstrahlung im zweiten Kanal aussendet. Dabei kann auf den benachbarten ersten Kanal 220 und den benachbarten dritten Kanal, durch die endliche Breite des Leistungsspektrums der Mikrowellenstrahlung 220 der Mikrowellen-Sendeeinheit, Mikrowellenstrahlung entfallen, die ein Signal/Rauschverhältnis für eine Mikrowellenschranke deren Mikrowellen-Sendeeinheit in den benachbarten Mikrowellen-Betriebs-Kanälen betrieben wird, verschlechtert.

Die Figur 2c skizziert schematisch, ein Leistungsdiagramm, indem über eine Vielzahl n von verfügbaren Mikrowellen-Betriebs-Kanälen c 240 eine bestimmte Mikrowellen-Leistung **P,** die beispielsweise von der Mikrowellen-Empfangseinheit 102 einer Mikrowellenschranke bestimmt wurde, aufgetragen ist. Dabei ist ein hoher Leistungswert im ersten und im n-ten Kanal c 240 aufgetragen, die beispielsweise jeweils von einer Mikrowellen-Einstrahlung einer anderen Mikrowellenschranke verursacht sein können. Mittels der Bestimmung einer solchen Mikrowellen-Leistung P kann für jeden, oder nur für einen Teil, der Vielzahl von verfügbaren Frequenz-Kanälen c 240 eine Fremdsignal-Amplitude bestimmt werden, um einen Mikrowellen-Betriebs-Kanal für den Betrieb der Mikrowellenschranke zu bestimmen, sodass Störungen bei dem Betreiben der Mikrowellenschranke durch Fremdsignale und/oder andere Mikrowellenschranken des Mikrowellenschranken-Systems minimiert werden. Beispielsweise kann der Mikrowellen-Betriebs-Kanal mit einem verfügbaren Mikrowellen-Betriebs-Kanal bestimmt werden, der eine minimale Fremdsignal-Amplitude aufweist.

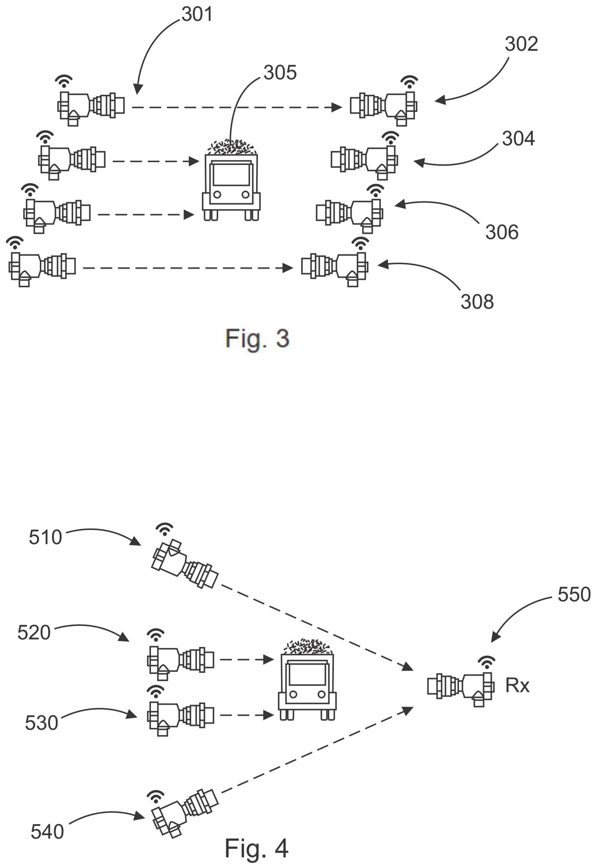

Die Figur 3 skizziert schematisch ein System aus vier Mikrowellenschranken 302, 304, 306 und 308 mit einer ersten Mikrowellenschranke 302 und einer zweiten Mikrowellenschranke 304 innerhalb eines Systems aus vier Mikrowellenschranken 302, 304, 306 und 308, die benachbart betrieben werden.

Dabei kann die jeweilige Mikrowellenschranke 302, 304, 306 und 308 eine Mikrowellen-Sendeeinheit mit einem elektrisch abstimmbaren Mikrowellen-Generator aufweisen und ist eingerichtet, mit einer wählbaren Mikrowellen-Frequenz betrieben zu werden. Die Mikrowellen-Empfangseinheit kann entsprechend mit einem elektrisch abstimmbaren Mikrowellen-Generator eingerichtet sein, um ein Mikrowellen-Signal der jeweiligen Mikrowellen-Sendeeinheit selektiv, in Bezug auf eine detektierte Mikrowellen-Frequenz, zu bestimmen.

Eine Position eines Objektes 305 kann, je nach Position des Objektes 305 in den jeweiligen Kopplungs-Pfaden 301 der jeweiligen Mikrowellenschranken 302, 304, 306 und 308 des Systems aus Mikrowellenschranken 302, 304, 306 und 308 detektiert werden.

Dabei kann das Objekt 305 mit einem jeweiligen Kopplungs-Pfad 301 zwischen der jeweiligen Mikrowellen-Sendeeinheit und einer jeweils zugeordneten Empfangseinheit so wechselwirken, dass ein von der jeweiligen Mikrowellen-Sendeeinheit in Richtung der jeweiligen Empfangseinheit ausgesandte Mikrowellen-Signal gedämpft wird.

Die vier Mikrowellenschranken 302, 304, 306 und 308 sind mittels einer Kommunikationseinheit, die jeweils mit einem Funksignals symbolisiert ist, eingerichtet, einen bestimmten Mikrowellen-Betriebs-Kanal von der Mikrowellen-Empfangseinheit der jeweiligen Mikrowellenschranke 302, 304, 306 und 308 an die jeweilige Mikrowellen-Sendeeinheit zu übertragen und zumindest die jeweilige Mikrowellen-Empfangseinheiten der vier Mikrowellenschranken 302, 304, 306 und 308 sind eingerichtet, signalmäßig miteinander gekoppelt zu werden, um, entsprechend einem Master-Slave Verfahren, die jeweiligen Betriebs-Kanäle der vier Mikrowellenschranken 302, 304, 306 und 308 zu bestimmen und Störungen bei einem Betreiben des Systems aus den vier Mikrowellenschranken 302, 304, 306 und 308 zu minimieren.

Dazu kann die jeweilige Mikrowellenschranke 302, 304, 306 und 308 eingerichtet sein, insbesondere in einer Startsequenz zum Auswählen eines Betriebs-Kanals für die jeweilige Mikrowellenschranke, für zumindest einen Teil einer gespeicherten Vielzahl von verfügbaren Frequenz-Kanälen für Mikrowellenschranken eine Fremdsignal-Amplitude mittels der jeweiligen Mikrowellen-Empfangseinheit zu bestimmen. In dieser Startsequenz kann die jeweilige Mikrowellen-Empfangseinheit alle verfügbaren Frequenz-Kanäle scannen, während die jeweiligen, oder alle Mikrowellen-Sendeeinheiten, deaktiviert sind, um in zumindest einem Teil der verfügbaren Frequenz-Kanäle eine jeweilige Fremdsignal-Amplitude zu bestimmen.

In einem Beispiel, wie dem Diagramm der Figur 2c, kann das Signal in dem Frequenz-Kanal 1 bzw. n entweder von anderen benachbarten Mikrowellenschranken verursacht sein oder von anderen Funkdiensten stammen. Beide können den Betrieb des Systems aus Mikrowellenschranken jedoch stören.

Dadurch, dass die jeweiligen Mikrowellenschranken 302, 304, 306 und 308 mit ihrer Kommunikationseinrichtung eingerichtet sind, signalmäßig miteinander gekoppelt zu werden, kann ein jeweiliger Mikrowellen-Betriebs-Kanal für die jeweilige Mikrowellenschranke, basierend auf der zumindest einen bestimmten Fremdsignal-Amplitude der verfügbaren Frequenz-Kanäle bestimmt werden, um Störungen bei einem Betreiben der ersten Mikrowellenschranke durch ein Fremdsignal zu minimieren. Das Übertragen des bestimmten Betriebs-Kanals an die jeweilige Mikrowellen-Sendeeinheit der Mikrowellenschranken 302, 304, 306 und 308 und die signalmäßige Kopplung der Mikrowellenschranken 302, 304, 306 und 308 untereinander kann, drahtgebunden und/oder drahtlos, insbesondere drahtlos via Bluetooth und/oder via Mikrowellen, insbesondere der Mikrowellen der Mikrowellenschranke, und/oder WLAN erfolgen.

Indem die Mikrowellenschranken 302, 304, 306 und 308 signalmäßig, beispielsweise in einem Master-Slave Verfahren und/oder mittels einer separaten Auswerteeinheit miteinander gekoppelt sind, kann für jede Mikrowellenschranke ein entsprechender Mikrowellen-Betriebs-Kanal bestimmt werden, um Störungen bei dem Betreiben des Systems aus vier Mikrowellenschranken 302, 304, 306 und 308 durch ein Fremdsignal zu minimieren, und an die jeweilige Mikrowellen-Sendeeinheit übertragen werden.

Die jeweils mit den Mikrowellenschranken 302, 304, 306 und 308 bestimmten Fremdsignale können an die Auswerteeinheit oder einen Master übertragenen werden, um die Betriebs-Kanäle für die jeweiligen Mikrowellenschranken 302, 304, 306 und 308 festzulegen und an die jeweilige Mikrowellenschranke und/oder die jeweiligen Mikrowellen-Sendeeinheiten zu übertragen.

D. h. die jeweilige Mikrowellenschranke kann eingerichtet sein, in einem System aus Mikrowellenschranken mit allen Mikrowellen-Sendeeinheiten und allen Mikrowellen-Empfangseinheiten des Systems von Mikrowellenschranken signalmäßig gekoppelt zu sein, um untereinander zu kommunizieren. Eine der Mikrowellen-Empfangseinheiten kann als Master eingerichtet sein, die Betriebs-Kanäle für die jeweiligen Mikrowellenschranken 302, 304, 306 und 308 zu bestimmen und an die jeweiligen Mikrowellenschranken 302, 304, 306 und 308 bzw. deren Mikrowellen-Sendeeinheiten zu übertragen. Insbesondere kann für die Bestimmung der jeweiligen Betriebs-Kanäle für die jeweiligen Mikrowellenschranken 302, 304, 306 und 308 die bestimmten Fremdsignal-Amplituden berücksichtigt werden.

Dabei können Stör-Strahlungen, die durch einen Betrieb einer der Mikrowellen-Sendeeinheiten der Mikrowellenschranken hervorgerufen wird, als Fremdsignal-Amplitude interpretiert werden.

Beispielsweise können die jeweiligen Betriebs-Kanäle so zugeordnet werden, dass räumlich angrenzenden Mikrowellenschranken frequenzmäßig nicht angrenzende Frequenz-Kanäle zugeordnet werden. Mittels eines Optimierungsverfahrens können die Betriebs-Kanäle, unter Berücksichtigung von Fremdsignal-Amplituden und Stör-Strahlungen beteiligter Mikrowellen-Sendeeinheiten, darüber hinaus weiter verbessert bestimmt werden, um Störungen zu minimieren. Somit kann verhindert werden, dass Störsignale von anderen Mikrowellen-Sendeeinheit den oder sonstigen Mikrowellen-Quellen zu Fehlschaltungen des Systems aus Mikrowellenschranken führen.

D. h. der Mikrowellenschranke 302 wird beispielsweise der Kanal 1 zugeordnet; der Mikrowellenschranke 304 wird der Kanal 3 zugeordnet; der Mikrowellenschranke 306 wird der Kanal 5 zugeordnet; und der Mikrowellenschranke 308 wird der Kanal 2 zugeordnet. Dabei sind die Mikrowellen-Frequenz-Kanäle 1 bis 5 frequenzmäßig in aufsteigender Abfolge aneinander angrenzend in einem Mikrowellen-Frequenzbereich, insbesondere zwischen einer unteren Frequenz fu und einer oberen Frequenz fo, angeordnet.

Die Figur 4 skizziert schematisch ein Mikrowellenschranken-System mit vier Mikrowellen-Sendeeinheiten 510 bis 540 und einer einzelnen Empfangseinheit 550, wobei die einzelne Empfangseinheit 550 die Empfangseinheit für alle Mikrowellenschranken 510 bis 540 des Mikrowellenschranken-Systems ist. Das bedeutet, dass der jeweilige Kopplung-Pfad der jeweiligen Mikrowellenschranke zwischen den Mikrowellen-Sendeeinheiten 510 bis 540 und der Empfangseinheit 550 aufgebaut wird. Insbesondere ist die jeweilige Mikrowellen-Sendeeinheit 510 bis 540 eingerichtet, ein Mikrowellen-Signal zu generieren, das moduliert ist und/oder mittels unterschiedlicher Mikrowellen-Frequenz-Kanälen mit der Empfangseinheit 550 gekoppelt ist. Die Empfangseinheit 550 ist eingerichtet, eine Dämpfung des Mikrowellen-Signals, basierend auf dem modulierten Mikrowellen-Signal und/oder entsprechend dem zugeordneten Mikrowellen-Frequenz-Kanal, selektiv zu detektieren.

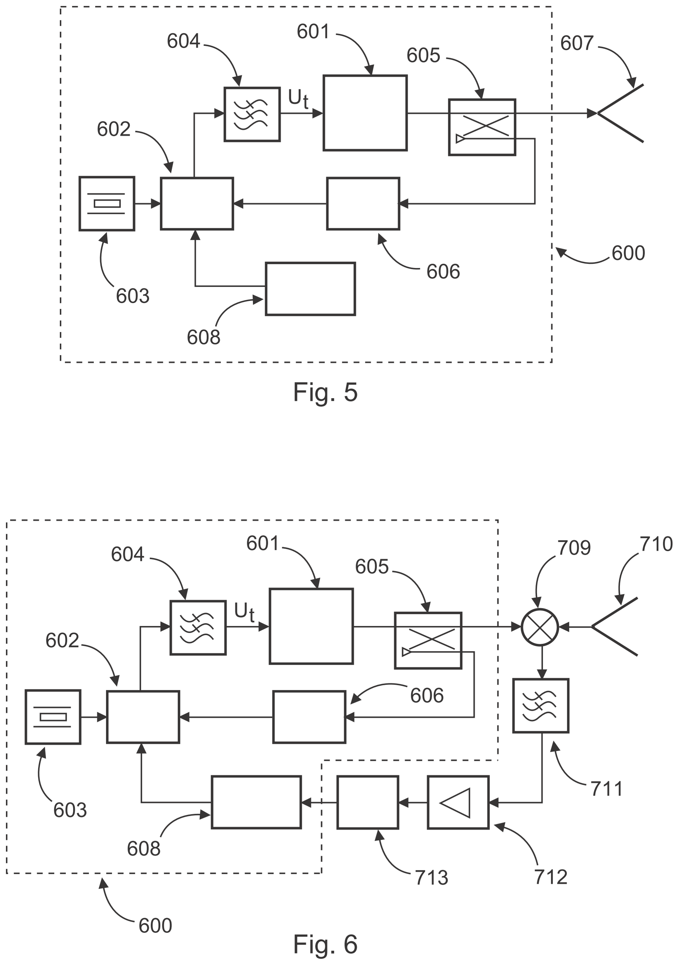

Die Figur 5 skizziert schematisch ein Blockschaltbild eines Senders einer Mikrowellen-Sendeeinheit von einer Mikrowellenschranke, die eingerichtet ist, mit einer wählbaren Mikrowellen-Frequenz betrieben zu werden. Dazu wird ein spannungsgesteuerter Mikrowellenoszillator 601 (VCO = voltage controlled oscillator), gemäß dem Blockschaltbild der Figur 5, in einer Phasenregelschleife betrieben. In der Phasenregelschleife wird der spannungsgesteuerte Mikrowellenoszillator 601 mittels eines PLL-Bausteins 602 (PLL = phase-locked loop) phasenstarr an einen sehr stabilen Referenzoszillator 603 gekoppelt. Vorzugsweise kann als Referenzoszillator 603 ein temperaturkompensierter Quarzoszillator (TCXO = temperature compensated crystal oscillator) verwendet werden. Mit dieser phasenstarren Kopplung lässt sich die hervorragende Stabilität des Referenzoszillators 603 auf den sehr viel höherfrequenten Mikrowellenoszillator 601 übertragen.

Der spannungsgesteuerte Mikrowellenoszillator 601 wird über eine von dem PLL-Baustein 602 und mittels eines Schleifenfilters 604 erzeugten Regelspannung Uₜ abgestimmt, wobei das Schleifenfilter 604 sowohl mit dem PLL Baustein 602, als auch mit dem spannungsgesteuerte Mikrowellenoszillator 601 gekoppelt ist. Der Regelkreis schließt sich, indem ein Teil des Ausgangssignals des spannungsgesteuerten Mikrowellenoszillators 601 mittels eines, mit einem Ausgang des spannungsgesteuerten Mikrowellenoszillators 601 elektrisch gekoppelten, Kopplers 605 ausgekoppelt wird und mittels eines, an den Koppler 605 elektrisch gekoppelten, optionalen Vorteilers 606 dem PLL-Baustein 602 zugeführt wird. Dieses Signal wird mittels des PLL-Bausteins 602 in einem Phasenkomparator des PLL-Bausteins 602 mit dem Signal des Referenzoszillators 603 verglichen.

Eine im Phasenkomparator entstehende Phasendifferenz der beiden Eingangssignale des PLL-Bausteins 602, nämlich von dem Referenzoszillator 603 und dem Ausgang des spannungsgesteuerten Mikrowellenoszillators 601, wird durch die Regelung sofort wieder ausgeglichen, so dass mittels des spannungsgesteuerten Mikrowellenoszillators 601 ein sehr stabiles und rauscharmes Mikrowellen-Sendesignal generiert wird.

Die Programmierung des PLL-Bausteins 602 und damit auch die Frequenzeinstellung des Mikrowellen-Sendesignals, welches über den Koppler 605 einer Sendeantenne 607 zugeführt wird, erfolgt vorzugsweise mittels eines Mikrocontrollers 608 oder einer anderen Prozessoreinheit. Viele auf dem Markt befindlichen spannungsgesteuerten Oszillatoren weisen interne Koppler und Vorteiler auf. In diesem Fall entfallen der Koppler 605 und der Vorteiler 606 als separate Bausteine und der spannungsgesteuerte Mikrowellenoszillator 601 weist einen zusätzlichen Vorteiler-Ausgang auf, der wiederum mit dem PLL-Baustein elektrisch gekoppelt wird.

Eine Änderung des Sendekanals wird mittels des Prozessors 608 in den PLL-Baustein 602 programmiert. Der oben beschriebene Regelkreis sorgt dafür, dass der spannungsgesteuerter Mikrowellenoszillator 601 schnell auf die neue gewünschte Mikrowellen-Frequenz und damit auch die Mikrowellenschranke auf einen neuen Mikrowellen-Frequenz-Kanal abgestimmt wird.

Die Figur 6 skizziert schematisch ein Blockschaltbild eines Empfängers einer Empfangseinheit von einer Mikrowellenschranke, die eingerichtet ist, eine Dämpfung des Mikrowellen-Signals, basierend auf einem zugeordneten Mikrowellen-Frequenz-Kanal, selektiv zu detektieren.

Die Oszillatorschaltung 600 entspricht der Oszillatorschaltung 600 der Figur 5. Diese Oszillatorschaltung 600 ist somit eingerichtet, ein Lokaloszillator (LO)-Signal für einen Mischer 709 zu generieren. Ein entsprechendes Empfangssignal, welches von der Empfangsantenne 710 empfangen wird, wird mit dem LO-Signal im Mischer 709 in ein sehr viel niederfrequenteres Zwischenfrequenzsignal heruntergemischt. Der Frequenzunterschied zwischen LO-Signal und Empfangssignal ist ein fester Wert und bestimmt die Frequenz des Zwischenfrequenzsignals. Das Zwischenfrequenzsignal passiert anschließend ein Bandpassfilter 711 und wird in einem Zwischenfrequenzverstärker 712 verstärkt. Anschließend erfolgt beispielsweise eine Abtastung des Signals in einem AD-Wandler 713 und die Weiterverarbeitung und Auswertung des Empfangspegels im Prozessor 608. Alternativ zu dem AD-Wandler 713 kann auch ein logarithmischer Verstärker zum Einsatz kommen.

Die Frequenzabstimmung der Empfängerschaltung auf verschiedene Mikrowellen-Frequenz-Kanäle erfolgt in gleicher Weise wie bei der Senderschaltung 600. Auch ein sequenzielles Durchstimmen auf die verwendeten Kanäle, zum selektiven Empfangen unterschiedlicher Mikrowellen-Frequenz-Kanäle, wie es beispielsweise von der Empfangseinheit, die mittels der Figur 5 beschrieben ist, kann dadurch realisiert werden.

Alternativ kann anstatt des sequenziellen Durchstimmens des Empfängers auf jeden benutzten Kanal auch das komplette benutzte Frequenzspektrum im jeweiligen erlaubten Frequenzband in den Zwischenfrequenzbereich gemischt werden. Voraussetzung hierbei ist, dass das Bandpassfilter 711 und die nachfolgenden Komponenten im Signalpfad "breit" genug sind, um das jeweilige Frequenz-Band zusammen verarbeiten zu können. Um die einzelnen Pegel in den benutzten Mikrowellen-Frequenz-Kanälen zu bestimmen, kann hierzu das Zwischenfrequenzsignal abgetastet werden und mittels einer Fourier-Transformation vom Zeitbereich in den Frequenzbereich transformiert werden. Aus dem entstehenden Zwischenfrequenzspektrum lassen sich dann die Empfangspegel selektiv den einzelnen benutzten Kanälen zuordnen.

Die Senderschaltung 600 der Figur 5 bzw. 6 kann sowohl aus Einzelkomponenten als auch integriert in einem integrierten Schaltkreis, ausgeführt sein. Dies gilt insbesondere für die Komponenten: spannungsgesteuerter Mikrowellenoszillator 601; PLL-Baustein 602; Schleifenfilter 604; Koppler 605; Vorteiler 606 und den Prozessor 608, welche prädestiniert sind, auf einem gemeinsamen Chip integriert zu werden.

**In** der Empfängerschaltung der Figur 6 könnten die zusätzlichen Komponenten Mischer 709, Bandpassfilter 711, Zwischenfrequenzverstärker 712 und der AD-Wandler 713 zusätzlich noch integriert werden. Eine Integration von lediglich Teilkomponenten der genannten Bauteile ist ebenfalls möglich.

Im Allgemeinen weisen käufliche PLL-Bausteine einen Modulationseingang auf, mit dessen Hilfe auf das CW-Ausgangssignal (CW: continuous wave) der Oszillatorschaltung 600 der

Figur 6 mittels zum Beispiel einer FSK (FSK: Frequency Shift Keying) oder PSK (PSK: Phase Shift Keying) - Modulation oder anderen Modulationsarten Informationen aufgebracht werden können.

## Patentansprüche

1. Mikrowellenschranken-System, mit:
einer ersten Mikrowellenschranke (100), deren Mikrowellen-Sendeeinheit einen elektrisch abstimmbaren Mikrowellen-Generator (600) aufweist, wobei die erste Mikrowellenschranke (100) eingerichtet ist, mit einer wählbaren Mikrowellen-Frequenz betrieben zu werden; und zumindest
einer zweiten Mikrowellenschranke, deren Mikrowellen-Sendeeinheit einen elektrisch abstimmbaren Mikrowellen-Generator (600) aufweist, wobei die zweite Mikrowellenschranke eingerichtet ist, mit einer wählbaren Mikrowellen-Frequenz betrieben zu werden; und wobei
die erste Mikrowellenschranke (100) und die zweite Mikrowellenschranke jeweils eine Mikrowellen-Sendeeinheit (104) und eine Mikrowellen-Empfangseinheit (102) aufweist; und wobei
das Mikrowellenschranken-System mittels der jeweiligen Mikrowellen-Empfangseinheit (102) eingerichtet ist, Mikrowellen-Betriebs-Kanäle (210) in einem verfügbaren Frequenzbereich für Mikrowellenschranken zu bestimmen; und das Mikrowellenschranken-System eingerichtet ist, den jeweiligen Mikrowellenschranken (100) des Mikrowellenschranken-Systems jeweils einen Mikrowellen-Betriebs-Kanal (210) so zuzuordnen, dass eine gegenseitige Störung der Mikrowellenschranken (110) vermindert wird; und
die jeweilige Mirowellenschranke eine Kommunikationseinheit aufweist, die eingerichtet ist, die jeweilige Mikrowellen-Empfangseinheit (102) mit der jeweiligen Mikrowellen-Sendeeinheit (104), drahtlos, signalmäßig zu koppeln, um den Mikrowellen-Betriebs-Kanal für den Betrieb der jeweiligen Mikrowellenschranke (100) von der Mikrowellen-Empfangseinheit (102) an die Mikrowellen-Sendereinheit (104) zu übertragen.

2. Mikrowellenschranken-System gemäß Anspruch 1, wobei das Mikrowellenschranken-System eingerichtet ist, abhängig von einer bereitgestellten Anzahl von Mikrowellenschranken und/oder einer bereitgestellten Anordnung der jeweiligen Mikrowellenschranken (100) in dem Mikrowellenschranken-System den jeweiligen Mikrowellenschranken (100) einen jeweiligen Mikrowellen-Frequenz-Kanal (210) so zuzuordnen, dass räumlich angrenzenden Mikrowellenschranken (100) des Mikrowellenschranken-Systems Frequenz-Kanäle (210) so zugeordnet werden, dass eine gegenseitige Störung durch Mikrowellen-Einstrahlung räumlich benachbarter Mikrowellenschranken in dem Mikrowellenschranken-System vermindert wird.

3. Mikrowellenschranken-System gemäß Anspruch 1 oder 2, wobei die Empfangseinheit zumindest einer Mikrowellenschranke (110, 120) eingerichtet ist, eine Dämpfung des Mikrowellen-Signals basierend auf einem Mikrowellen-Betriebs-Kanal (210) zu bestimmen.

4. Mikrowellenschranken-System gemäß Anspruch 2 oder 3, wobei das Mikrowellenschranken-System eingerichtet ist, abhängig von der bereitgestellten Anordnung der jeweiligen Mikrowellenschranken in dem Mikrowellenschranken-System den Mikrowellenschranken (100) Mikrowellen-Betriebs-Kanäle (210) so zuzuordnen, dass jeweils räumlich aneinander angrenzenden Mikrowellenschranken des Mikrowellenschranken-Systems frequenzmäßig nicht angrenzende Mikrowellen-Frequenz-Kanäle (210) zugeordnet werden.

5. Mikrowellenschranken-System gemäß einem der vorhergehenden Ansprüche, wobei die jeweilige Mikrowellen-Empfangseinheit (102) eingerichtet ist, eine Fremdsignal-Amplitude für zumindest einen Mikrowellen-Betriebs-Kanal der Vielzahl der verfügbaren Frequenz-Kanäle zu bestimmen; und der Mikrowellen-Betriebs-Kanal aus den verfügbaren Frequenz-Kanälen (202), basierend auf der zumindest einen bestimmten Fremdsignal-Amplitude der verfügbaren Frequenz-Kanäle (202) bestimmt wird, um Störungen bei einem Betreiben der jeweiligen Mikrowellenschranke (100) durch ein Fremdsignal zu vermindern.

6. Mikrowellenschranken-System gemäß einem der vorhergehenden Ansprüche, wobei die Mikrowellen-Empfangseinheit (102) mit der Mikrowellen-Sendeeinheit (104) mittels der Kommunikationseinheit drahtlos, insbesondere drahtlos via Bluetooth und/oder drahtlos via WLAN, signalmäßig miteinander gekoppelt zu werden.

7. Mikrowellenschranken-System gemäß einem der vorhergehenden Ansprüche, wobei die jeweilige Kommunikationseinheit eingerichtet ist, die jeweilige Mikrowellen-Empfangseinheit (102) mit einer weiteren Mikrowellenschranke signalmäßig zu koppeln, um den Mikrowellen-Betriebs-Kanal für den Betrieb der weiteren Mikrowellenschranke (304), festzulegen und/oder den Betriebskanal an die weitere Mikrowellenschranke zu übertragen und/oder um eine von der Empfangseinheit der weiteren Mikrowellenschranke bestimmte Fremdsignal-Amplitude an die jeweilige Mikrowellenschranke (100) zu übertragen.

8. Mikrowellenschranken-System gemäß einem der vorhergehenden Ansprüche, wobei die erste Mikrowellenschranke (100) räumlich benachbart zu der zweiten Mikrowellenschranke angeordnet ist; und das Mikrowellenschranken-System eingerichtet ist, den Mikrowellen-Betriebs-Kanal der ersten Mikrowellenschranke (100) zu bestimmen, während die Mikrowellen-Sendeeinheit der zweiten Mikrowellenschranke auf einem zweiten Mikrowellen-Betriebs-Kanal betrieben wird.

9. Mikrowellenschranken-System gemäß Anspruch 8, wobei Stör-Strahlung, die durch einen Betrieb der Sendeeinheit der zweiten Mikrowellenschranke auf dem zweiten Betriebs-Kanal hervorgerufen wird, von der ersten Mikrowellenschranke (100) als Fremdsignal-Amplitude interpretiert wird, um den Mikrowellen-Betriebs-Kanal für die erste Mikrowellenschranke (100) zu bestimmen.

10. Mikrowellenschranken-System gemäß einem der vorhergehenden Ansprüche, die mittels der jeweiligen Kommunikationseinheit eingerichtet ist, eine Diagnoseinformation von der jeweiligen Mikrowellen-Sendeeinheit (104) an die jeweilige Mikrowellen-Empfangseinheit (102) zu übertragen, um eine Fehlfunktion der jeweiligen Mikrowellenschranke (100) zu vermeiden und/oder zu bestimmen.

11. Mikrowellenschranken-System gemäß einem der vorhergehenden Ansprüche, wobei die jeweilige Mikrowellen-Empfangseinheit (102) mit der jeweiligen Mikrowellen-Sendeeinheit (104) mittels eines Mikrowellen-Signals, basierend auf dem jeweiligen Mikrowellen-Betriebs-Kanal, gekoppelt ist, um einen Kopplungs-Pfad zwischen der jeweiligen Mikrowellen-Sendeeinheit und derjeweiligen Empfangseinheit aufzubauen; und insbesondere das Mikrowellenschranken-System eingerichtet ist, eine Dämpfung des Mikrowellen-Signals in dem jeweiligen Kopplungs-Pfad zu bestimmten.

12. Mikrowellenschranken-System gemäß einem der vorhergehenden Ansprüche, wobei zumindest eine der Mikrowellenschranken (100) eingerichtet ist, basierend auf einem modulierten Mikrowellen-Signal betrieben zu werden, um eine gegenseitige Störung von zumindest zwei Mikrowellenschranken des Mikrowellenschranken-Systems zu vermindern.

13. Mikrowellenschranken-System gemäß Anspruch 12, wobei die Mikrowellen-Sendeeinheit der zumindest einen Mikrowellenschranke (100) eingerichtet ist, ein Mikrowellen-Signal zu generieren, das moduliert ist; und eine mit der so eingerichteten Mikrowellen-Sendeeinheit gekoppelten Empfangseinheit eingerichtet ist, die Dämpfung des Mikrowellen-Signals, basierend auf dem modulierten Mikrowellen-Signal, selektiv zu detektieren.

14. Mikrowellenschranken-System gemäß Anspruch 12 oder 13 wobei das jeweilige Mikrowellen-Signal zumindest einer Mikrowellenschranke (100) des Mikrowellenschranken-Systems mit einem Code moduliert ist, und die jeweilige Mikrowellenschranke eingerichtet ist, basierend auf dem, mit dem Code modulierten Mikrowellen-Signal, selektiv betrieben zu werden.

15. Mikrowellenschranken-System gemäß einem der vorhergehenden Ansprüche, wobei eine einzelne Mikrowellen-Empfangseinheit sowohl die Mikrowellen-Empfangseinheit der ersten Mikrowellenschranke (100) als auch die Mikrowellen-Empfangseinheit der zweiten Mikrowellenschranke ist.
